(19) Europäisches Patentamt
European Patent Office
Office européen des brevets

(11) **EP 4 737 417 A1**

(12) **EUROPÄISCHE PATENTANMELDUNG**

(43) Veröffentlichungstag:
**06.05.2026  Patentblatt 2026/19**

(21) Anmeldenummer: **25207191.5**

(22) Anmeldetag: **07.10.2025**

(51) Internationale Patentklassifikation (IPC):
**C03C 17/09** (2006.01)      **C03C 17/36** (2006.01)

(52) Gemeinsame Patentklassifikation (CPC):
**C03C 17/09; C03C 17/3605; C03C 17/3649; C03C 17/3676; C03C 17/3686;** C03C 2217/26; C03C 2217/262; C03C 2217/27; C03C 2217/94; C03C 2218/365

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **31.10.2024  DE 102024131788**

(71) Anmelder: **SCHOTT AG**
**55122 Mainz (DE)**

(72) Erfinder:
• **HENN, Christian**
  **55122 Mainz (DE)**
• **GROSSE, Gregor**
  **55122 Mainz (DE)**
• **KLINK, Tobias**
  **55122 Mainz (DE)**

(74) Vertreter: **Schott Corporate IP**
**Hattenbergstraße 10**
**55122 Mainz (DE)**

(54) **VERGLASUNG, INSBESONDERE FÜR EINE TÜR EINES OFENS, TÜR SOWIE OFEN UMFASSEND EINE SOLCHE TÜR UND/ODER VERGLASUNG, SOWIE VERWENDUNG DER VERGLASUNG**

(57)     Die vorliegende Erfindung betrifft allgemein das Gebiet der Verglasungen, insbesondere das Gebiet der Verglasung für Türen von Haushaltsgeräten, wobei die Verglasung bzw. die Tür, welche eine solche Verglasung umfasst, betrieblich hohen thermischen Belastungen von bis zu 300°C ausgesetzt ist, sowie auch Haushaltsgeräte, beispielsweise Öfen, mit solchen Verglasungen und/oder Türen. Im Speziellen betrifft die vorliegende Offenbarung Verglasungen bzw. Türen, welche insbesondere in Öfen zum Einsatz kommen können, die mittels Mikrowellenstrahlung betrieben werden. Die Verglasung bzw. Tür nach der vorliegenden Offenbarung ist allerdings auf diesen Einsatzzweck nicht beschränkt und kann vielmehr auch allgemein in solchen Anwendungen zum Einsatz kommen, bei welchen eine elektromagnetische Abschirmung, insbesondere von Mikrowellenstrahlung, notwendig ist.

Fig. 6

**Beschreibung**

Gebiet der Erfindung

Die vorliegende Erfindung betrifft allgemein das Gebiet der Verglasungen, insbesondere das Gebiet der Verglasung für Türen von Haushaltsgeräten, wobei die Verglasung bzw. die Tür, welche eine solche Verglasung umfasst, betrieblich hohen thermischen Belastungen von bis zu 300°C oder sogar noch mehr, beispielsweise sogar bis zu 450°C, ausgesetzt ist, sowie auch Haushaltsgeräte, beispielsweise Öfen, mit solchen Verglasungen und/oder Türen. Im Speziellen betrifft die vorliegende Offenbarung Verglasungen bzw. Türen, welche insbesondere in Öfen zum Einsatz kommen können, die mittels Mikrowellenstrahlung betrieben werden können. Die Verglasung bzw. Tür nach der vorliegenden Offenbarung ist allerdings auf diesen Einsatzzweck nicht beschränkt und kann vielmehr auch allgemein in solchen Anwendungen zum Einsatz kommen, bei welchen eine elektromagnetische Abschirmung, insbesondere von Mikrowellenstrahlung, notwendig ist.

Hintergrund der Erfindung

Verglasungen, welche zum Schutz vor elektromagnetischer Strahlung und/oder allgemein zur elektromagnetischen Abschirmung verwendet werden, sind im Stand der Technik bekannt und beschrieben. Beispielsweise werden Verglasungen in Türen für Öfen verwendet, welche mittels Mikrowellenstrahlung betrieben werden. Zur Sicherheit der Benutzer ist dafür zu sorgen, dass keine Mikrowellenstrahlung austritt bzw. eventuell austretende Mikrowellenstrahlung unterhalb bestimmter, sehr enger Grenzwerte bleibt. Dennoch soll ein Blick ins Innere beispielsweise eines Ofens (beispielsweise einer sogenannten "Mikrowelle") auch weiterhin möglich sein. Im Rahmen der vorliegenden Offenbarung werden Öfen, bei welchen die Erhitzung des Garguts zumindest auch mittels Mikrowellenstrahlung erfolgt, auch synonym als "Mikrowelle" oder Mikrowellengerät oder Mikrowellenofen bezeichnet. Darunter werden im Rahmen der Offenbarung auch sogenannte Kombigeräte verstanden, bei welchen auch vorgesehen ist, dass eine Erhitzung des Garguts auch auf anderem Wege, insbesondere mittels thermischer Energie, erfolgen kann.

Bekannte Mikrowellenöfen verwenden deshalb beispielsweise Türen, bei denen neben einer Glasscheibe oder einer Scheibe aus durchsichtigem Kunststoff noch ein Metallgitter (meist als metallisches Lochgitter ausgestaltet) verwendet wird. Auf diese Weise kann das Austreten von Mikrowellenstrahlung oberhalb der festgelegten Grenzwerte verhindert werden. Auch ist weiterhin der Blick ins Innere des Ofens durch die Tür möglich. Allerdings ist die Sicht durch das Metallgitter deutlich behindert.

Daher werden auch andere Lösungen vorgeschlagen, welche als Ziel haben, einen möglichst guten Blick ins Innere des Ofens zu ermöglichen, gleichzeitig aber ebenfalls das Austreten von Mikrowellenstrahlung zu verhindern bzw. das Einhalten von gesetzlichen Vorgaben zum Austreten von Mikrowellenstrahlung zu gewährleisten.

Die deutsche Patentanmeldung DE 103 07 217 A1 sieht daher eine Tür für einen Mikrowellenofen vor, der ohne ein metallisches Lochgitter auskommt. Die Tür weist ein Sichtfenster auf, welche zwei Scheiben umfasst, die eine Mikrowellen-absorbierende und eine Mikrowellen-reflektierende Beschichtung aufweisen, wobei die beiden Beschichtungen jeweils aus bekannten sogenannten "TCO"-Materialien (TCO = transparentes leitfähiges Oxid) aufgebaut sind, beispielsweise aus ITO, AZO oder FTO. Diese weisen dann noch eine weitere Beschichtung, insbesondere aus $SiO_2$, auf, um die Kratzbeständigkeit- und/oder die thermische Beständigkeit der funktionalen TCO-Schichten zu verbessern. Da die funktionalen, also den Austritt von Mikrowellenstrahlen weitgehend unterbindenden, Beschichtungen nach DE 103 07 217 A1 wie ausgeführt aus "klassischen" transparenten leitfähigen Oxiden ausgebildet sind, kommt es aber auch dazu, dass Mikrowellenstrahlung zumindest teilweise absorbiert wird. Damit steht nicht die gesamte Mikrowellenleistung des Geräts für das Erhitzen des Garguts zur Verfügung. Weiterhin müssen die funktionalen Beschichtungen wegen ihres spezifischen Widerstandes im Bereich von $10^{-3}$ bis $10^{-4}$ Ohm*cm recht dick, also mit Schichtdicken von deutlich mehr als 200 nm Dicke, aufgebracht werden. Ein möglichst guter Schutz vor dem Austritt von Mikrowellenstrahlung ist nur dann möglich, wenn die Beschichtung(en) so ausgestaltet ist(sind), dass eine möglichst hohe Reflexion der Mikrowellenstrahlung und damit sehr niedrige Flächenwiderstände vorliegen. Damit sind aber nach DE 103 07 217 A1 mit den dort genannten Materialien Schichtdicken von ca. 300 nm bis 500 nm notwendig, beispielsweise für Flächenwiderstände der Beschichtung(en) von 10 Ohm/□.

Die internationale Patentanmeldung WO 2021/152083 beschreibt eine metallische Beschichtung umfassend Nickel und Chrom, die zusammen mit einem transparenten leitfähigen Oxid auf eine Scheibe aufgetragen wird. Auf diese Weise kann die Funktion des Lochgitters ersetzt werden und eine gute Einsicht in den Garraum ist auf diese Weise möglich. Nachteilig ist aber, dass gerade bei hohen Temperaturen zwischen beispielsweise 250°C bis 300°C, wie sie in sogenannten Kombiöfen oder Kombigeräten auftreten, bei denen das Gargut auch auf andere Weise als durch Mikrowellenstrahlung erhitzt wird, solche Beschichtungen nicht ausreichend langzeitstabil sind. Insbesondere können sich die optischen Eigenschaften, aber auch die Mikrowellenreflexion verändern mit der Gefahr, dass sich der Mikrowellenaustritt aus dem Mikrowellenofen erhöht.

Die deutsche Patentanmeldung DE 10 2021 132 627 A1 beschreibt weiterhin die Verwendung einer Mikrowellen reflektierenden Beschichtung, die auf einer sogenannten Nickel-Chrom-Schicht (NiCr) basiert. Zum Schutz vor Degradation umfasst diese Beschichtung neben der Mikrowellen reflektierenden funktionalen NiCr-Schicht noch eine Barriereschicht umfassend ein Oxid, Nitrid und/oder Oxinitrid eines Metalls oder Halbmetalls. Die im Ausführungsbeispiel genannte Beschichtung aus NiCr mit Barriere zeigt bei einer Transmission von ca. 25% eine Mikrowellenreflexion von ca. 55% und im beschriebenen Aufbau einer Ofentür mit zwei Scheiben sowie mit einer Low-E Beschichtung ($SnO_2$:F) eine Mikrowellenleckrate von 0,3 mW/cm$^2$. Kundenspezifikationen liegen aber bei Mikrowellenleckraten von weniger als 0,1 mW/cm$^2$, so dass eine Lösung mit NiCr als metallische Reflexionsschicht nicht ausreichend ist.

Es fehlt damit an Verglasungen, welche eine sehr niedrige Leckrate für Mikrowellenstrahlung ermöglichen bei gleichzeitig guter Durchsicht bzw. Transmission für sichtbares Licht, um Durchsicht durch die Verglasung zu gewährleisten (beispielsweise den Einblick in einen Garraum eines Ofens) sowie einer hohen Temperaturbeständigkeit.

Aufgabe der Erfindung

Die Aufgabe der Erfindung besteht in der Bereitstellung einer Verglasung, welche die vorstehenden Schwierigkeiten des Standes der Technik zumindest teilweise mindert und/oder überwindet. Ein weiterer Aspekt besteht in der Bereitstellung einer verbesserten Verglasung für allgemeine elektromagnetische Abschirmung, insbesondere gegenüber Mikrowellenstrahlung. Nochmals weitere Aspekte betreffen die Bereitstellung einer Tür für einen Ofen sowie einen Ofen selbst.

Zusammenfassung der Erfindung

Die Aufgabe der Erfindung wird gelöst durch den Gegenstand der unabhängigen Ansprüche. Bevorzugte und/oder spezielle Ausführungsformen finden sich in den abhängigen Ansprüchen sowie der Beschreibung und den Zeichnungen der Offenbarung.

Die vorliegende Offenbarung betrifft damit allgemein eine Verglasung umfassend ein scheibenförmiges Glassubstrat mit zwei einander gegenüberliegenden Seitenflächen und einer umlaufenden Kantenfläche und wenigstens einer auf wenigstens einer Seitenfläche angeordneten Beschichtung. Die Beschichtung umfasst wenigstens eine Schicht. Die Verglasung weist auf:

- eine Mikrowellenreflexion zwischen 20% und 95%, bevorzugt zwischen 60% und 95%, besonders bevorzugt zwischen 70% und 75%, bevorzugt bestimmt für eine Frequenz zwischen 2,3 GHz und 2,7 GHz, beispielsweise bei 2,45 GHz;
- einen mittleren spektralen Transmissionsgrad der Verglasung und/oder des scheibenförmigen Glassubstrats, bezogen auf die Lichtart C, von wenigstens 5 % im Wellenlängenbereich von 380 nm bis 780 nm, und bevorzugt höchstens 70%, besonders bevorzugt zwischen 10% und 50%, ganz besonders bevorzugt zwischen 20 % und 40%, insbesondere bezogen auf eine Dicke des scheibenförmigen Glassubstrats (10) und/oder der Verglasung (100) zwischen 3 mm und 4 mm,
- eine Trübung (Haze) von weniger als 10%, bevorzugt weniger als 5%, besonders bevorzugt weniger als 2%, ganz besonders bevorzugt weniger als 1%, und wobei

die wenigstens eine Schicht eine metallische Schicht umfassend Magnesium oder Molybdän oder Mischungen hiervon ist.

Unter der Ausbildung der wenigstens einen Schicht als metallischen Schicht umfassend Magnesium oder Molybdän oder Mischungen hiervon wird verstanden, dass die metallische Schicht allgemein aus einem der genannten Metalle ausgebildet sein kann, beispielsweise das entsprechende Metall zu mehr als 50 Gew.-% oder sogar zu mehr als 90 Gew.-% oder 95 Gew.- % umfasst. Wenn ausgeführt ist, dass die metallische Schicht aus dem entsprechenden Metall, beispielsweise Magnesium oder Molybdän oder einer Legierung (Mischung) dieser Metalle besteht, wird darunter verstanden, dass die metallische Schicht bis auf unvermeidliche Spuren aus dem entsprechenden Metall oder der entsprechenden Legierung ausgebildet ist.

Die Prüfung der Trübung/des Haze erfolgt mit dem Messgerät HAZE-GUARD plus der Firma BYK-Gardener.

Eine solche Ausgestaltung einer Verglasung ist sehr vorteilhaft, weil auf diese Weise eine besonders sichere Verglasung bereitgestellt wird, die sogar höchsten Kundenanforderungen gerecht wird hinsichtlich der Minimierung von Mikrowellenleckrate. Hier sind vorzugsweise Leckraten von weniger als 1 mW/cm$^2$, bevorzugt von weniger als 0,5 mW/cm$^2$, insbesondere von weniger als 0,3 mW/cm$^2$, besonders bevorzugt von weniger 0,2 mW/cm$^2$ möglich, beispielsweise sogar von kleiner als 0,1 mW/cm$^2$. Trotz dieser sehr guten Mikrowellenreflexion ist weiterhin eine gute Durchsicht durch die Verglasung gewährleistet. Dies kann beispielsweise anhand der Transmissionswerte der Verglasung wie vorstehend definiert belegt werden. Dies bedeutet somit, dass bei der Ausgestaltung der Verglasung nach der Offenbarung trotz der hohen Reflexion, die mit der wenigstens einen Beschichtung im Bereich der Mikrowelle erzielt wird, noch immer eine ausreichende Transmission im visuellen Spektrum von im Mittel im Bereich zwischen 5 und 70%, bevorzugt zwischen 10 und 50%, besonders bevorzugt zwischen 20 und 40% erzielt wird. Dies bedeutet, dass eine Verglasung erhalten wird, mit der eine Semitransparenz erzielt wird, wobei durch die Semitransparenz, einen neutralen Farbort und die im sichtbaren Spektrum existierende Restreflexion, ein sogenannter Deadfront-Effekt der Verglasung erzielbar ist. Wird eine solche Verglasung beispielsweise in eine Ofentür eingebaut, beispielsweise die einer sogenannten "Mikrowelle", so sind Gargut bzw. allgemein der Ofeninhalt nur beim Betrieb des Geräts mit Beleuchtung sichtbar, im ausgeschalteten Zustand hingegen erscheint eine reflektierende Oberfläche, welche dem Ofendesign angepasst werden kann. Darüber hinaus bleibt das Gargut bzw. der Ofeninhalt im eingeschalteten Zustand des Ofens aufgrund eines niedrigen Streuanteils des Lichts (Haze bzw. Trübung) gut erkennbar. Der Haze befindet sich im Bereich von weniger als 5%, bevorzugt weniger als 2%, besonders bevorzugt weniger als 1%.

Auf diese Weise, insbesondere mit der Ausgestaltung der wenigstens einen Schicht als metallische Schicht umfassend Magnesium oder Molybdän oder Mischungen hiervon, ist also ganz besonders überraschend einfach eine Ausgestaltung einer Verglasung möglich, welche eine gute Mikrowellenreflexion aufweist, wobei gleichzeitig eine ausreichend hohe Transmission der Verglasung und eine sehr geringe Trübung möglich sind, also weiterhin eine Durchsicht durch die Verglasung möglich ist. Vorzugsweise ist die Verglasung auch sehr stabil ausgebildet, insbesondere thermisch und/oder chemisch stabil. Dies ist insbesondere deshalb überraschend, weil das Material der wenigstens einen Schicht, die metallisch ausgebildet ist, gerade kein besonders "edles", damit also inhärent eher "stabiles" Material/Metall umfasst.

Im Rahmen der vorliegenden Offenbarung gelten die folgenden Definitionen:

Unter einer Verglasung wird ein Erzeugnis verstanden, welches beispielsweise aus Sichtfenster verwendet werden kann und wenigstens ein Glassubstrat, vorzugsweise ein scheibenförmiges Glassubstrat, umfasst. Insbesondere kann eine Verglasung auch lediglich ein Glassubstrat, beispielsweise ein scheibenförmiges Glassubstrat, umfassen. Im Rahmen der vorliegenden Offenbarung umfasst das scheibenförmige Glassubstrat, das zwei einander gegenüberliegenden Seitenflächen und eine umlaufende Kantenfläche aufweist, wenigstens eine auf wenigstens einer Seitenfläche angeordnete Beschichtung, sodass die Verglasung der Offenbarung nach einer Ausführungsform auch als veredeltes Glassubstrat verstanden werden kann. Es sind aber auch Ausführungsformen denkbar, bei welcher die Verglasung so ausgebildet ist, dass sie zwei scheibenförmige Glassubstrate umfasst. In diesem Fall kann die Verglasung also als Scheibenverbund aufgefasst werden. Die Verglasung nach der vorliegenden Offenbarung ist allgemein dazu ausgebildet, beispielsweise als Einhausung oder als Teil einer Einhausung verwendet zu werden, beispielsweise also als Bestandteil einer Tür einer sogenannten "Mikrowelle" oder allgemeiner als Bestandteil einer Tür eines Ofens, der zumindest auch mittels Mikrowellenstrahlung, also mit einem DC-Magnetron, betrieben wird.

Unter einem scheibenförmigen Glassubstrat wird ein Formkörper aus oder umfassend Glas verstanden, welcher über zwei Seitenflächen, die einander gegenüberliegen und vorzugsweise zueinander parallel ausgerichtet sind, sowie eine umlaufende und die beiden Seitenflächen miteinander verbindende Kantenfläche verfügt. Ein solches scheibenförmiges Glassubstrat kann allgemein auch als Glasscheibe bezeichnet werden und ist allgemein gekennzeichnet dadurch, dass seine Dicke, also der Abstand der beiden Seitenflächen voneinander, wenigstens eine Größenordnung kleiner ist als Länge und Breite, also die beiden Seitenflächen insgesamt deutlich mehr an der Gesamtoberfläche des das Glassubstrat bildenden Formkörpers einnehmen als die schmale umlaufende Kantenfläche. Das Glassubstrat kann allgemein plan vorliegen oder auch gewölbt sein. Sofern im Rahmen der vorliegenden Offenbarung auf eine Dicke des Glassubstrats abgestellt wird, wird darunter der Abstand der beiden Seitenflächen in einer Richtung senkrecht zu deren Oberflächen voneinander verstanden. Hierbei werden die Dicken der Beschichtung oder ggf. Beschichtungen, welche auf einer oder auch auf beiden Seitenflächen des Glassubstrats angeordnet sein können, nicht berücksichtigt, da diese in der Regel deutlich dünner sind als das Glassubstrat selbst und daher im Rahmen der Messgenauigkeit für die Dickenbestimmung des Glassubstrats nicht berücksichtigt werden müssen.

Das Material des scheibenförmigen Glassubstrats ist allgemein nicht besonders beschränkt und kann insbesondere Kalk-Natron-Glas sein oder auch ein anderes Glas, beispielsweise ein Borosilikatglas oder ein Aluminium-Silikatglas oder ein Lithium-Aluminium-Silikatglas. Das scheibenförmige Glassubstrat kann allgemein thermisch oder chemisch vorgespannt vorliegen. Es ist auch möglich, dass das scheibenförmige Glassubstrat eine Glaskeramik als Material umfasst, d.h. beispielsweise das scheibenförmige Glassubstrat aus Glaskeramik ausgebildet ist.

Unter einer Beschichtung wird im Rahmen der vorliegenden Offenbarung ein Überzug verstanden, welche wenigstens eine Materiallage umfasst, welche auf eine Unterlage, die auch als Substrat bezeichnet werden kann, mittels eines Beschichtungsverfahrens aufgebracht worden ist. Im Rahmen der vorliegenden Offenbarung kann eine Beschichtung auch kurz als "Schicht" bezeichnet werden, wobei allerdings allgemein eine Beschichtung auch mehr als nur eine Schicht umfassen kann, also beispielsweise verschiedene Materiallagen, die zumindest teilweise unterschiedlich ausgebildet sind, umfassen kann. Es ist im Rahmen der vorliegenden Offenbarung nicht notwendig, dass alle von der Beschichtung umfassten Materiallagen mittels desselben Beschichtungsverfahren aufgebracht worden sind. Es ist nämlich möglich, unterschiedliche Beschichtungsverfahren zu verwenden, beispielsweise PVD- oder CVD-Verfahren oder auch nasschemische Verfahren wie beispielsweise Sol-Gel-Beschichtungsverfahren. Vorzugsweise werden im Rahmen der vorliegenden Offenbarung allerdings aufgrund von deren guten Schichteigenschaften PVD-Beschichtungen bevorzugt, insbesondere Schichten bzw. Beschichtungen, die mittels eines Sputterverfahrens, beispielsweise eines DC- oder MF-Magnetron-Sputterverfahrens, aufgebracht werden oder aufgebracht worden sind. Allgemein, ohne Beschränkung auf irgendeine Ausführungsform einer Verglasung, kann eine Beschichtung und/oder eine Schicht im Rahmen der vorliegenden Offenbarung auf einer Seitenfläche eines Glassubstrats vollflächig aufgebracht sein, worunter verstanden wird, dass die Beschichtung und/oder Schicht die entsprechende Seitenfläche zu mindestens 95% bedeckt, vorzugsweise zu wenigstens 98% oder sogar zu 100%, oder die Beschichtung und/oder Schicht kann nur bereichsweise aufgebracht vorliegen. Unterschiedliche Schichten und/oder Beschichtungen können unterschiedliche Belegungsgrade aufweisen, beispielsweise kann die wenigstens eine Beschichtung zu 95% aufgebracht sein, eine weitere Beschichtung, welche auch auf einer anderen Seitenfläche und/oder auf einem weiteren scheibenförmigen Glassubstrat angeordnet sein kann, kann aber auch nur bereichsweise aufgebracht sein, beispielsweise lediglich 50% der entsprechenden Seitenfläche bedecken.

Sofern im Rahmen der Offenbarung auf den metallischen Charakter eines Materials und/oder einer Schicht und/oder Beschichtung abgestellt wird, wird darunter verstanden, dass im entsprechenden Material bzw. der Schicht/-Beschichtung ein metallischer Charakter, charakterisiert durch das Vorliegen einer metallischen Bindung, vorliegt. Der metallische Charakter eines Materials zeigt sich beispielsweise in dessen elektronischer Leitfähigkeit, einem metallischen Glanz (sofern das Material bzw. Schicht/Beschichtung eine ausreichende Materialstärke aufweist), einer entsprechenden Wärmeleitung und sonstigen charakteristischen Eigenschaften, die dem Fachmann bekannt sind.

Entsprechend werden unter einem Halbmetall die Halbmetalle nach der üblichen Klassifikation des Periodensystems der Elemente verstanden; halbleitende Materialien sind solche, welche über die für solche Materialien charakteristische Bandlücke verfügen. Ein bekanntes Halbmetall ist Silizium, dessen halbleitender Charakter ebenfalls bekannt ist und das aufgrund dieser Eigenschaften vielfache Verwendung findet.

Die besonders vorteilhafte Ausgestaltung der Verglasung nach Ausführungsformen der Offenbarung wird dadurch ermöglicht, dass mit der Ausgestaltung der wenigstens einen Schicht als metallische Schicht umfassend Magnesium oder Molybdän oder Mischungen hiervon metallische Schichten erhalten werden können, welche bei einer sehr geringen Dicke dennoch eine hohe Reflexion im relevanten Wellenlängenbereich des elektromagnetischen Spektrums ausbilden. Obwohl es sich um unedle Metalle handelt, ist dennoch eine ausreichende thermische Beständigkeit sowohl des Farbeindrucks als auch alternativ oder zusätzlich der Reflexionseigenschaften für den Mikrowellenbereich des elektromagnetischen Spektrums gegeben. Überraschend ist dabei, dass die beiden genannten unedlen Metalle sowohl jeweils alleine als auch in einer Mischung eine bessere Beständigkeit aufweisen als beispielsweise Silber, welches nicht nur ein Edelmetall ist und daher an sich über eine bessere (Temperatur-)Beständigkeit verfügen sollte als Magnesium und/oder Molybdän, sondern auch eine hohe Reflexion für elektromagnetische Strahlung aufweist. Dennoch zeigen sich die metallischen Schichten nach der vorliegenden Offenbarung solchen beispielsweise Silber umfassenden Schichten überlegen und es zeigt sich, dass insbesondere Silber nicht nur thermisch, sondern auch chemisch und mechanisch vergleichsweise sehr instabil ist. Dazu sind selbstverständlich die metallischen Schichten nach der Offenbarung, d.h. aus oder umfassend Magnesium oder Molybdän oder Mischungen hiervon, auch deutlich preisgünstiger als beispielsweise Schichten aus oder umfassend ein Edelmetall wie Silber.

Besonders bevorzugt ist eine Ausführungsform, bei der die metallische Schicht Molybdän umfasst, insbesondere als Molybdänschicht ausgebildet ist. Sehr überraschend hat sich gezeigt, dass gerade metallische Schichten, welche auf Molybdän basieren bzw. Molybdän umfassen bzw. als Molybdänschicht ausgebildet sind, sehr gute Beständigkeitseigenschaften aufweisen. Insbesondere behält es auch als dünne Schicht seine Korrosionseigenschaften bei, welche es auch als Bulkmaterial besitzt. Beispielhaft zeigen chemische Tests, also insbesondere solche Tests, welche die Beständigkeit der Beschichtung und/oder der metallischen Schicht betreffen und vorzugsweise Kontaktreaktionen mit verschiedenen Substanzen, wie Reinigungsmitteln und dergleichen, überprüfen, keine oder nur geringfügige Angriffe nach mehrfacher Belastung unter Raumtemperatur und 120°, worauf auch weiter unten in Bezug auf die Figuren noch genauer eingegangen werden wird.

Besonders bevorzugt ist eine Ausführungsform, wobei die Summe der Gehalte von Magnesium und Molybdän in der metallischen Schicht wenigstens 40 wt-% beträgt, bevorzugt wenigstens 70 wt-% und mehr bevorzugt wenigstens 90 wt-%. Dabei kann nur eines der beiden Metalle Magnesium und Molybdän in der metallischen Schicht vorhanden sein oder aber auch beide Metalle. Sofern beide Metalle enthalten sind, sollte der Gehalt an Molybdän bevorzugt größer als der Gehalt an Magnesium gewählt werde, wodurch eine besonders hohe Korrosionsbeständigkeit erreicht wird. Mit abnehmender Summe der Gehalte an Magnesium und Molybdän verschlechtern sich auch die Reflexionseigenschaften für den Mikrowellenbereich.

Bevorzugt ist eine Ausführungsform, bei welcher die metallische Schicht aus Molybdän ausgebildet ist und das Molybdän eine kubische Kristallstruktur ausbildet. Es hat sich gezeigt, dass gerade eine solche Ausbildung sehr vorteilhaft ist, sodass trotz einer sehr dünnen Schichtdicke, die allgemein für die metallische Schicht, unabhängig von deren genauer Ausbildung zwischen 5 nm und 100 nm beträgt, vorzugsweise zwischen 7 nm und 50 nm, die vorgenannten positiven Eigenschaften ausbildet, also die hohe Reflexion für Mikrowellenstrahlung, eine gute thermische, mechanische und chemische Beständigkeit. Dies ist zwar an sich für Molybdänschichten nicht gänzlich unbekannt, denn diese werden beispielsweise als Verschleißschutzschichten in der Werkzeugindustrie eingesetzt. Dies ist insbesondere deshalb überraschend, da Molybdänschichten zwar beispielsweise als blickdichte Beschichtungen bekannt sind, die mittels thermischem Spritzen aufgebracht werden und in der Werkzeugindustrie verwendet werden, wo sie als Verschleißschutz dienen. Solche Schichten sind allerdings deutlich anders aufgebaut, weisen insbesondere deutlich größere Schichtdicken auf, sodass es überraschend ist, dass trotz der wie vorstehend ausgeführt nur sehr geringen Schichtdicke der metallischen Schicht nach der Offenbarung mit Molybdän als Schichtmaterial der metallischen Schicht noch so gute Eigenschaften erzielt werden können. Insbesondere sind auf diese Weise hervorragende Mikrowellenreflexionseigenschaften und damit besonders geringe Leckraten für Mikrowellenstrahlung für die Verglasung erzielbar, deutlich bessere mithin als mit den bekannten NiCr-Schichten des Standes der Technik.

Allgemein kann vorgesehen sein, dass die wenigstens eine Schicht, vorzugsweise eine metallische Schicht nach vorstehend beschriebenen Ausführungsformen, insbesondere also eine metallische Schicht umfassend Magnesium oder Molybdän und/oder Mischungen hiervon, eine Dicke zwischen 5 nm und 100 nm, beispielsweise zwischen 7 nm und 50 nm, aufweist.

Weiterhin kann allgemein vorgesehen sein, dass die wenigstens einen Schicht, insbesondere die wenigstens eine Schicht nach Ausführungsformen, beispielsweise in Form einer metallischen Schicht umfassend Magnesium oder Molybdän und/oder Mischungen hiervon, bevorzugt mit einer Dicke zwischen 5 nm und 100 nm, beispielsweise zwischen 7 nm und 50 nm, einen Flächenwiderstand zwischen 1 Ohm/□ und 500 Ohm/□, bevorzugt zwischen 5 Ohm/□ und 100 Ohm/□, besonders bevorzugt zwischen 5 Ohm/□ und 50 Ohm/□ aufweist.

Nach einer Ausführungsform der Verglasung weist die Verglasung eine Mikrowellenleckrate von weniger als 1 mW/cm$^2$, bevorzugt von weniger als 0,5 mW/cm$^2$, besonders bevorzugt von weniger 0,2 mW/cm$^2$ auf. Dies ist vorteilhaft, da auf diese Weise sehr hohe Anforderungen an die Anwendersicherheit erfüllt werden können.

Nach einer Ausführungsform umfasst die Beschichtung eine Barriereschicht, wobei die Barriereschicht ausgebildet ist als Oxid und/oder Nitrid und/oder Oxinitrid von Aluminium, Silizium, Titan, Hafnium und/oder Chrom, wobei bevorzugt die Barriereschicht ausgebildet ist als Nitrid umfassend Silizium und Aluminium, wobei der Massenanteil von Aluminium an der metallischen und halbleitenden Komponente (also nicht am Anteil von Sauerstoff und/oder Stickstoff) mindestens 5% und bevorzugt höchstens 70% beträgt und besonders bevorzugt zwischen 5% und 50% liegt. Beispielsweise kann also die Barriereschicht, bezogen auf die Summe des Gehalts von Aluminium und Silizium, 20 Gew.-% Aluminium und 80 Gew.-% Silizium umfassen, oder 15 Gew.-% Aluminium und 85 Gew.-% Silizium, oder 10 Gew.-% Aluminium und 90 Gew.-% Silizium, oder 5 Gew.-% Aluminium und 95 Gew.-% Silizium. Andere Zusammensetzungen im genannten und spezifizierten Bereich sind selbstverständlich ebenfalls möglich. Nach einer bevorzugten Ausführungsform umfasst die Barrierebeschichtung damit einen Gewichtsanteil der Aluminiumbestandteile (beispielsweise von Aluminiumnitrid) von wenigstens 5% und bevorzugt höchstens 70% und besonders bevorzugt zwischen 5% und 50%. Die Barriereschicht grenzt vorzugsweise direkt an die metallische Schicht an.

Nach einer Ausführungsform ist die metallische Schicht allgemein zwischen der Seitenfläche des scheibenförmigen Glassubstrats und der Barriereschicht angeordnet. Mit anderen Worten liegt allgemein bei der Verglasung nach Ausführungsformen ein Sandwichaufbau in der Form vor, dass die metallische Schicht zwischen Glassubstrat und Barriereschicht angeordnet ist. Vorzugsweise grenzt die Barriereschicht direkt an die metallische Schicht an. Es kann dabei allgemein vorgesehen sein, dass die metallische Schicht direkt an der Seitenfläche des Glassubstrats angeordnet ist, also direkt auf das Glassubstrat aufgebracht worden ist. Es kann aber allgemein auch vorgesehen sein und sogar bevorzugt, dass zwischen der Seitenfläche des scheibenförmigen Glassubstrats und der metallischen Schicht eine weitere Schicht angeordnet ist. Es kann insbesondere vorgesehen sein, dass die weitere Schicht, sofern vorhanden, als Oxid und/oder Nitrid und/oder Oxinitrid von Aluminium, Silizium, Titan, Hafnium und/oder Chrom ausgebildet sein kann, bevorzugt als Nitrid umfassend Silizium und Aluminium, wobei insbesondere die weitere Schicht und die Barriereschicht gleich ausgebildet sein können. Dies kann sogar ganz besonders bevorzugt sein. Unter "gleich ausgebildet" wird hier insbesondere verstanden, dass die Materialzusammensetzung der weiteren Schicht und der Barriereschicht gleich sein kann. Die Schichtdicken der weiteren Schicht und der Barriereschicht können sich allerdings auch in diesem Fall voneinander unterscheiden. Dies kann insbesondere auch deshalb bevorzugt und/oder notwendig sein, wenn ein bestimmter Farbeindruck erzielt werden soll. In diesem Fall kann die Beschichtung umfassend die weitere Schicht, die metallische Schicht und die Barriereschicht auch als optisches Interferenzschichtsystem verstanden werden. Allgemein dient die weitere Schicht insbesondere aber auch als Diffusionsbarriere zwischen dem Glassubstrat und der metallischen Schicht und kann auf diese Weise die thermische, mechanische und/oder chemische Beständigkeit der metallischen Schicht und damit insgesamt der Beschichtung sowie der resultierenden Verglasung vorteilhaft verbessern.

Allgemein, ohne Beschränkung auf eine spezielle Ausführungsform, weist die Barriereschicht Dicken zwischen 5 nm und 300 nm auf, bevorzugt zwischen 10 nm und 100 nm, besonders bevorzugt zwischen 10 nm und 40 nm.

Entsprechende Schichtdicken können allgemein, ohne Beschränkung auf eine spezielle Ausführungsform, auch für die weitere Schicht vorliegen.

Nach einer Ausführungsform der Verglasung weist diese eine besonders gute Temperaturbeständigkeit auf, welche sich zum einen in der Temperaturbeständigkeit des Farborts nach Temperaturbelastung zeigt, als auch in der Beständigkeit der Mikrowellenreflexion nach Temperaturbelastung. Nach einer Ausführungsform ist die Verglasung damit allgemein, ohne Beschränkung auf eine spezielle Ausführungsform oder ein besonderes Beispiel gekennzeichnet durch eine Temperaturbeständigkeit in der Form, dass der Farbortunterschied $\Delta E$ zwischen dem Farbort der Verglasung nach Beschichtung und nach einer erfolgten Temperaturbehandlung bei 250°C für 100 Stunden, höchstens 5, bevorzugt höchstens 3, besonders bevorzugt höchstens 1, beträgt, wobei der Farbortunterschied, $\Delta E$, definiert ist als

$$\Delta E = \sqrt{((a_0^* - a_T^*)^2 + (b_0^* - b_T^*)^2 + (L_0^* - L_T^*)^2)},$$

wobei der Farbort E gegeben ist im CIEL\*a\*b\*-System und wobei der Index "0" sich auf den Farbort vor Temperaturbehandlung und der Index "T" sich auf den Farbort nach Temperaturbehandlung bezieht,
und/oder

dass die Mikrowellenreflexion nach erfolgter Temperaturbehandlung bei 250°C für 100 Stunden höchstens 5%, bevorzugt höchstens 2% kleiner ist als vor Temperaturbehandlung.

Mit anderen Worten bedeutet eine Temperaturbeständigkeit im Rahmen der vorliegenden Offenbarung nach einer bevorzugten Ausführungsform, dass Farbort und/oder Mikrowellenreflexion der Verglasung, vorzugsweise beide, nach einer Temperaturbehandlung wie vorstehend ausgeführt stabil sind bzw. höchstens in den vorstehend genannten Grenzen variieren.

Eine besonders bevorzugte Ausführungsform der Verglasung sieht vor, dass die Verglasung eine weitere Beschichtung umfasst, wobei die weitere Beschichtung ein transparentes leitfähiges Oxid umfasst. Unter einem transparenten leitfähigen Oxid werden insbesondere die Materialien ITO (Indium-Zinn-Oxid, also Indium-dotiertes Zinnoxid), AZO (Aluminium-Zink-Oxid, also Aluminiumdotiertes Zinkoxid) sowie $SnO_2$:F verstanden (Fluor-dotiertes Zinnoxid) sowie Mischungen hiervon. Insbesondere kann die weitere Beschichtung lediglich eines dieses Materialien umfassen oder mehrere hiervon.

Wie auch vorstehend bereits ausgeführt, sind transparente leitfähige Oxide (TCO, transparent conducting oxides) als Materialien und Bestandteile von Verglasungen für die Abschirmung gegen Mikrowellenstrahlung bereits bekannt. Nachteilig an diesen Materialien und entsprechenden Schichten ist allerdings, dass diese Materialien Mikrowellenstrahlung und/oder IR-Strahlung auch stark absorbieren und sich die Schichten und entsprechend auch die Verglasungen stark aufheizen können. Dies führt nicht nur zu einer erhöhten Temperaturbelastung der Materialien der Verglasung und damit zu einer geringen Beständigkeit dieser Verglasungen bzw. Schichten, sondern auch zu einer verringerten Nutzersicherheit durch den möglichen Kontakt mit warmen bzw. heißen Verglasungen.

Allerdings kann es vorteilhaft sein, solche TCO-Materialien dennoch als Bestandteil der Verglasung vorzusehen. Als vorteilhaft haben sich dabei insbesondere folgende Ausführungsformen gezeigt:

- Die weitere Beschichtung ist auf der Seitenfläche des scheibenförmigen Glassubstrats angeordnet, auf welcher nicht die wenigstens eine Beschichtung angeordnet ist. Mit anderen Worten kann in diesem Fall die Verglasung insbesondere so ausgestaltet sein, dass sie nur ein scheibenförmiges Glassubstrat umfasst, und die weitere Beschichtung und die wenigstens eine Beschichtung sind auf unterschiedlichen Seitenflächen des Glassubstrats angeordnet. In diesem Fall kann insbesondere vorgesehen sein, dass die Verglasung so in eine Tür eines Ofens eingebaut wird, dass im eingebauten Zustand die Seitenfläche, auf welcher die wenigstens eine Beschichtung (die die metallische Schicht umfasst) angeordnet ist, ins Innere des Ofens weist, sodass die weitere Beschichtung aus oder umfassend ein TCO-Material vom Ofeninneren weg angeordnet ist. Dies ist deshalb vorteilhaft, weil auf diese Weise zunächst ein großer Teil der Mikrowellenstrahlung ohnehin von der wenigstens einen Beschichtung selbst reflektiert wird und nur ein kleinerer Teil noch auf die weitere Beschichtung trifft. Auf diese Weise kann Mikrowellenstrahlung weiter reflektiert werden und es kommt auch zu Absorptionseffekten, die aber weniger stark ausfallen, als wenn die gesamte Mikrowellenstrahlung zunächst auf die weitere Beschichtung aufträfe.

Es kann aber auch vorgesehen sein, dass die Verglasung ein weiteres scheibenförmiges Glassubstrat umfasst. Insbesondere kann in dem Fall die Verglasung zwei scheibenförmige Glassubstrate umfassen, wobei auf dem einen scheibenförmigen Glassubstrat die wenigstens eine Beschichtung angeordnet ist und auf dem weiteren scheibenförmigen Glassubstrat die weitere Beschichtung. Insbesondere kann in diesem Fall auch vorgesehen sein, dass die wenigstens eine Beschichtung auf beiden Seitenflächen des scheibenförmigen Glassubstrats angeordnet ist, wobei die wenigstens eine Beschichtung auf beiden Seitenflächen identisch ausgebildet sein kann, aber nicht sein muss, insbesondere die Schichtdicken unterschiedlich sein können, aber nicht müssen.

Der vorstehend beschriebene Aufbau der Verglasung umfassend zwei scheibenförmige Glassubstrate, wobei auf einem eine weitere Beschichtung angeordnet ist, kann ganz besonders bevorzugt sein, um eine besonders effiziente Abschirmung eines Anwenders gegen Mikrowellenstrahlung zu gewährleisten und besonders niedrige Leckraten zu erzielen. Insbesondere kann in diesem Fall für den Einbau der Verglasung beispielsweise in eine Ofentür vorgesehen sein, dass das scheibenförmige Glassubstrat, auf welchem die wenigstens eine Beschichtung angeordnet ist (und das auch auf beiden Seitenflächen die wenigstens eine Beschichtung aufweisen kann) zum Ofeninnern hin angeordnet ist.

Allgemein betrifft damit die vorliegende Offenbarung auch eine Verglasung, umfassend ein scheibenförmiges Glassubstrat mit zwei einander gegenüberliegenden Seitenflächen und einer umlaufenden Kantenflächen und wenigstens eine auf wenigstens einer Seitenfläche angeordnete Beschichtung umfassend wenigstens eine Schicht, wobei die Verglasung aufweist

- eine Mikrowellenreflexion zwischen 20% und 95%, bevorzugt zwischen 60% und 95 %, besonders bevorzugt zwischen 70% und 95%, bevorzugt bestimmt für eine Frequenz zwischen 2,3 GHz und 2,7 GHz,
- einen mittleren spektralen Transmissionsgrad der Verglasung und/oder des scheibenförmigen Glassubstrats, bezogen auf die Lichtart C, von wenigstens 5 % im Wellenlängenbereich von 380 nm bis 780 nm, und bevorzugt höchstens 70%, besonders bevorzugt zwischen 10% und 50%, ganz besonders bevorzugt zwischen 20 % und 40%, insbesondere bezogen auf eine Dicke des scheibenförmigen Glassubstrats und/oder der Verglasung zwischen 3 mm und 4 mm,
- eine Trübung (Haze) von weniger als 10%, bevorzugt weniger als 5%, besonders bevorzugt weniger als 2%, ganz besonders bevorzugt weniger als 1%,

   wobei die wenigstens eine Schicht eine metallische Schicht umfassend Magnesium oder Molybdän oder Mischungen hiervon ist,

   wobei die Verglasung eine weitere Beschichtung umfassend ein transparentes leitfähiges Oxid (TCO) umfasst, und wobei

- die weitere Beschichtung auf der Seitenfläche des scheibenförmigen Glassubstrats angeordnet ist, auf welcher nicht die wenigstens eine Beschichtung angeordnet ist, oder wobei
- die Verglasung ein weiteres scheibenförmiges Glassubstrat mit zwei einander gegenüberliegenden Seitenflächen und einer umlaufenden Kantenfläche umfasst und die weitere Beschichtung auf einer der beiden Seitenflächen des weiteren scheibenförmigen Glassubstrats angeordnet ist, und wobei besonders bevorzugt auf beiden Seitenflächen des einen scheibenförmigen Glassubstrats die Beschichtung angeordnet ist.

Bevorzugt kann dabei aus dem Grund der Erzielung einer möglichst geringen Mikrowellenleckrate gerade eine Ausführungsform der Verglasung mit zwei scheibenförmigen Glassubstraten sein. Insbesondere gelten alle Ausführungen, welche zur Ausgestaltung der Beschichtung mit der wenigstens einen Schicht, zu der oder den Barriereschicht(en) und zur weiteren Beschichtung gemacht worden sind, in entsprechender Weise auch für die Ausgestaltung der Verglasung mit zwei scheibenförmigen Glassubstraten.

Vorzugsweise kann im Fall, dass die Verglasung eine weitere Beschichtung umfasst, die Verglasung allgemein so ausgestaltet sein, dass sie - eine Mikrowellenleckrate von weniger als 1 mW/cm$^2$, bevorzugt von weniger als 0,5 mW/cm$^2$, besonders bevorzugt von weniger 0,2 mW/cm$^2$ aufweist.

Es kann allgemein, wie auch vorstehend bereits ausgeführt, vorgesehen sein, dass die Beschichtung und die weitere Beschichtung, insbesondere alle Schichten und alle

Beschichtungen, welche auf die Verglasung nach Ausführungsformen, sei es vollflächig oder nur bereichsweise, aufgebracht sind, um Beschichtungen bzw. Schichten handelt, welche mittels eines sogenannten Gasphasenabscheidungsverfahrens, insbesondere mittels eines PVD-Verfahrens, aufgebracht worden sind.

Bei einer Ausführungsform der Verglasung, bei welchen beispielsweise die wenigstens eine Schicht der wenigstens einen Beschichtung noch mit einer sogenannten Barriereschicht kombiniert ist, kann eine solche Ausgestaltung, bei welcher beide Schichten der wenigstens einen Beschichtung mittels des - mit notwendigen Änderungen, also beispielsweise dem Wechsel eines Targets aufgrund einer unterschiedlichen chemischen Zusammensetzung der wenigstens einen Schicht und der Barriereschicht - selben Verfahrens erhalten worden sind, besonders vorteilhaft sein. Beispielhaft kann dies für eine Ausgestaltung mit der wenigstens einen Schicht als metallische Schicht aus oder umfassend metallisches Molybdän und einer Barriereschicht bedeuten, dass die metallische Schicht und die Barriereschicht beide in einem CVD- oder PVD-Verfahren hergestellt werden, und zwar in einer Beschichtungsabfolge, also beispielsweise, indem das zu beschichtende scheibenförmige Glassubstrat in derselben Reaktionskammer verbleibt sowohl bei der Beschichtung der wenigstens einen Schicht als auch bei dem nachfolgenden Aufbringen der Barriereschicht. Beispielhaft können in einem Sputter - oder Aufdampfprozess die metallische Schicht aus oder umfassend Molybdän und die Barrierebeschichtung also ohne Vakuumbruch nacheinander hergestellt werden. Dies hat den Vorteil, dass die Oberfläche der metallischen Schicht aus oder umfassend Molybdän vor der Barrierebeschichtung nicht mit Materialien aus der Umgebung angereichert wird, also beispielsweise mit Bestandteilen der Umgebungsluft in Kontakt trifft und durch diese verunreinigt wird. Durch die Verwendung von Vakuumverfahren kann vermieden werden, dass sich zusätzlicher Sauerstoff, Stickstoff, Wasser und/oder Verschmutzungen, beispielsweise mit den Metallatomen oder Metallionen von Calcium, Kalium und/oder Natrium und/oder weiteren Spurenelementen, auf der Oberfläche der abgeschiedenen Schicht absetzen können, was wiederum deren eine Korrosion fördern kann, da diese Verunreinigung sich bei einem solchen "Vakuumbruch" bereits unter der Barriereschicht anlagern können. Die Abscheidung kann allerdings auch zweistufig erfolgen (z.B. gesputterte Molybdän-Schicht und eine Sol-Gel-Barriereschicht), jedoch mit den beschriebenen Nachteilen. Damit ist die Barrierewirkung bei einem solchen Verfahrenswechsel und insbesondere bei einem Vakuumbruch allerdings nicht so effizient.

Allgemein, ohne Beschränkung auf eine spezielle Ausführungsform der Verglasung, kann die Verglasung, wie ausgeführt, eine Temperaturbeständigkeit in der Form aufweisen,

dass der Farbortunterschied ΔE zwischen dem Farbort der Verglasung nach Beschichtung und nach einer erfolgten Temperaturbehandlung bei 250°C für 100 Stunden höchstens 5, bevorzugt höchstens 3, besonders bevorzugt höchstens 1, beträgt, wobei der Farbortunterschied, ΔE, definiert ist als

$$\Delta E = \sqrt{((a_0^* - a_T^*)^2 + (b_0^* - b_T^*)^2 + (L_0^* - L_T^*)^2)},$$

wobei der Farbort E gegeben ist im CIEL*a*b*-System und wobei der Index "0" sich auf den Farbort vor Temperaturbehandlung und der Index "T" sich auf den Farbort nach Temperaturbehandlung bezieht, und/oder

dass die Mikrowellenreflexion nach erfolgter Temperaturbehandlung bei 250°C für 100 Stunden höchstens 5%, bevorzugt höchstens 2% kleiner ist als vor Temperaturbehandlung aufweist.

Die vorstehenden Ausführungen, die beispielhaft für eine metallische Schicht aus oder umfassend Molybdän getroffen wurden, gelten selbstverständlich auch für andere Ausgestaltung der wenigstens einen Schicht, die bevorzugt als metallische Schicht ausgebildet ist, also beispielsweise für deren Ausgestaltung als Magnesium umfassende oder aus Magnesium ausgebildete Schicht.

Beispiele

Die Erfindung wird im Folgenden anhand von Beispielen weiter erläutert.

Der folgenden Tabelle 1 sind drei verschiedene Verglasungen hinsichtlich der mit ihnen erzielten Mikrowellenleckrate einander gegenübergestellt.

**Tabelle 1**

| Beispiel Nr. | Schichtmaterialien | Mikrowellenleckrate für Verglasung [mW/cm$^2$] | Mikrowellenleckrate bezogen auf scheibenförmiges Glassubstrat [mW/cm$^2$] |
|---|---|---|---|
| Vergleichsbeispiel (VB) | NiCr und Barriereschicht | 4 | 195 |
| Beispiel 1 (B1) | Mo und Barriereschicht | 1 | 3,75 |
| Beispiel 2 (B2) | Mg und Barriereschicht | 0,5 | 0,375 |

In der vorstehenden Tabelle sind drei unterschiedliche Verglasungen einander gegenübergestellt. Alle Verglasungen umfassen zwei scheibenförmige Glassubstrate, bei welchen auf einem ersten scheibenförmigen Glassubstrat, welches in einem Testofen (hier: ein Modell der Fa. LG, nämlich Modell MS23NECBW mit einer Mikrowellenleistung von 1000 W) dem Innenraum, also zu einem potentiellen Gargut hin, die wenigstens eine Beschichtung umfassend wenigstens eine Schicht angeordnet ist. Die wenigstens eine Schicht ist als metallische Schicht ausgebildet. Weiterhin umfassen die Beschichtung noch eine Barriereschicht. Auf dem zweiten scheibenförmigen Glassubstrat ist eine weitere Beschichtung nach vorstehend beschrieben Ausführungsformen angeordnet, nämlich umfassend ein TCO. Diese weitere Beschichtung weist hier beispielhaft einen Flächenwiderstand von ca. 15 Ohm/□ auf.

Es zeigt sich, dass bei einer Ausgestaltung der wenigstens einen Beschichtung umfassend wenigstens eine Schicht, welche als metallische Schicht umfassend Molybdän ausgebildet ist, die Mikrowellenleckrate der Verglasung um den Faktor 4 reduziert. Hier zeigt sich auch die besonders positive Ausgestaltung der Verglasung, wenn sie zwei scheibenförmige Substrate umfasst, bzw. wenn noch eine weitere Beschichtung als Bestandteil der Verglasung vorgesehen ist. Allgemein, ohne Beschränkung auf das vorstehend beschriebene Beispiel der Ausgestaltung der Verglasung, ist es, wie auch vorstehend ja allgemein beschrieben, ebenfalls möglich, dass die weitere Beschichtung, sofern vorhanden, auf demselben scheibenförmigen Glassubstrat, allerdings auf der der wenigstens einen Beschichtung gegenüberliegenden Seitenfläche des scheibenförmigen Glassubstrats angeordnet ist, also insbesondere auch eine Ausgestaltung der Verglasung mit nur einem einzigen scheibenförmigen Glassubstrat oder zumindest mit nur einem einzigen scheibenförmigen Glassubstrat, welches Beschichtungen aufweist.

Die wenigstens eine Schicht, ausgebildet als metallische Schicht umfassend Molybdän, reduziert, wie man für die beispielhaften Ausführungen einer Verglasung der vorstehenden Tabelle sehen kann (Beispiel 1), die Mikrowellenleckrate im Vergleich zu NiCr (Vergleichsbeispiel) um einen Faktor 4. Auch eine Schicht, welche als metallisch Schicht umfassend Magnesium ausgebildet ist, ist entsprechend geeignet für eine Verglasung nach einer Ausführungsform, wie man dem vorstehenden Beispiel 2 entnehmen kann.

Bei der Barriereschicht nach Tabelle 1 handelt es sich um eine Barriereschicht nach einer Ausführungsform, wie sie in der vorliegenden Offenbarung allgemein für Ausführungsformen der Verglasung beschrieben ist.

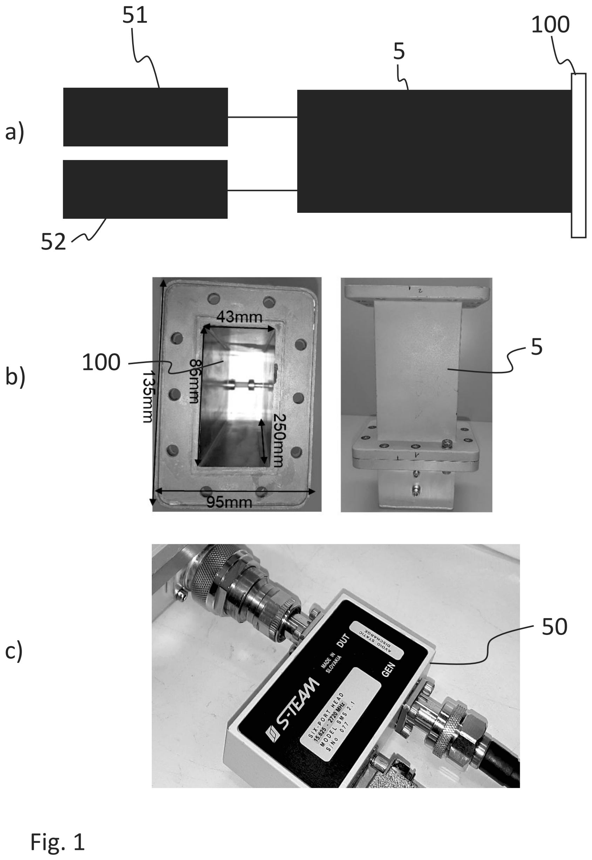

In der folgenden Tabelle 2 ist ein Vergleich von Verglasungen aufgezeigt, welche eine Beschichtung umfassend wenigstens eine, hier als metallische Schicht ausgebildete Schicht, sowie teilweise (außer Vergleichsbeispiel -VB - 2) eine Barriereschicht aufweisen. Die Verglasungen sind hier Ausführungsformen, welche lediglich ein scheibenförmiges Glassubstrat aufweisen. Der verwendete Testaufbau entspricht dem, auf welchen in der nachfolgenden beschriebenen Fig. 1 noch eingegangen wird. Der Testaufbau nach Fig. 1 ist insbesondere geeignet, um die wenigstens eine, hier als metallische Schicht ausgebildet Schicht, in unterschiedlichen Ausführungen, beispielsweise nach Ausführungsformen der Offenbarung (umfassend Mo und/oder Mg) oder als Vergleichsbeispiel (hier umfassend NiCr als metallisches Material) hinsichtlich ihrer Mikrowellenreflexion vergleichen zu können. Allgemein wird im Rahmen der vorliegenden Offenbarung ein Vergleichsbeispiel auch mit "VB" abgekürzt. Beispiele werden als Beispiel mit Nummer bezeichnet oder einfach mittels einer Nummer.

Tabelle 2

| Probe | Metall | Barriere | Dicke (Barriere) | Flächenwiderstand 4-Punkt | Transmission [%] | Haze [%] | L | a | b |
|---|---|---|---|---|---|---|---|---|---|
| VB 2 | NiCr | | | 171 | 25,4 | 0,59 | 65,31 | -1,42 | 0,86 |
| VB 3 | NiCr | AlSiN | 20nm | 152 | 25,6 | 0,67 | 61,76 | -0,91 | 9,69 |
| VB 4 | NiCr | AlSiO | 20nm | - | 27,1 | 0,99 | 62,2 | -1,05 | 5,63 |
| 3 | Mo | AlSiN | 20nm | | 25,1 | 0,65 | 64,1 | -1,73 | 1,72 |
| 4 | Mg | AlSiN | 20nm | | 23,5 | 1,16 | 78,4 | 1,49 | 19,08 |

**Tabelle 2 (fortgesetzt)**

| Probe | Mikrowellenreflexion bei 2,45μm Schichtseite in% | Mikrowellen-reflexion bei 2,45μm Glasseite in % | ΔE nach 250°C | ΔWiderstand nach 250°C[1] | Δ Mikrowellenreflexion bei 2,45μm Schichtseite in % nach 250°C | Δ Mikrowellenreflexion bei 2,45μm Glasseite in % nach 250°C |
|---|---|---|---|---|---|---|
| VB 2 | 64 | 54 | 11,27 | 153 | -6,3 | -3,4 |
| VB 3 | 66 | 55 | 0,46 | -5 | -0,8 | 2,5 |
| VB 4 | 64,5 | 54 | 0,57 | - | -1,1 | 1,3 |
| 3 | 85 | 81 | 0,19 | | -1 | 0 |
| 4 | 96 | 93 | 0,96 | | 0 | -2 |
| [1] Es handelt sich um den Flächenwiderstand in Ohm/□. | | | | | | |

Für den Test der Mikrowellenreflexion der vorstehenden Verglasungen nach Tabelle 2 wurde ein Mikrowellengenerator der Firma S-Team, Modell SMS 2.1 für die Erzeugung von Mikrowellenstrahlung in einem Frequenzbereich bis 2,7 GHz verwendet, welcher Mikrowellen bei niedrigeren Leistungen im Bereich von Milliwatt (mW) zur Verfügung stellt. Mit einem solchen Aufbau nach Fig. 1 lassen sich Reflexionen im Mikrowellenbereich bei der Frequenz 2,45 GHz bestimmen, welche im Bereich zwischen 20 und 95%, bevorzugt zwischen 60 und 95%, besonders bevorzugt zwischen 70 und 95% liegen. Hier zeigt sich die besondere Qualität der Reflexion für Verglasungen nach Ausführungsformen, beispielhaft mit der Beschichtung der Beispiele 3 und 4.

Dabei zeigt sich auch der besondere Vorteil der Verglasungen nach Ausführungsformen, insbesondere im Hinblick auf die Beständigkeit nach einer Temperaturbelastung bei 250°C (beispielweise bei 100 Stunden), die sich im geringen ΔE nach Temperaturbelastung zeigt, im geringen Unterschied der Mikrowellenreflexion nach Temperaturbelastung und in einem nicht feststellbaren Unterschied im Widerstand nach Temperaturbelastung (siehe Spalte "ΔWiderstand nach 250°C" in der vorstehenden Tabelle 2). Besonders vorteilhaft zeigt sich hier insbesondere eine Ausführung, bei welcher die metallische Schicht Molybdän umfasst, insbesondere als Molybdänschicht ausgebildet ist.

Hier kann auch ein weiteres bevorzugtes Merkmal von Verglasungen nach Ausführungsformen gezeigt werden. Vorzugsweise ist allgemein für die Verglasung vorgesehen, dass die Mikrowellenreflexion sich zwischen Glas- und Schichtseite um nicht mehr als 30%, bevorzugt nicht mehr als 20%, unterscheidet. Dies gewährleistet einen beidseitigen Einsatz der Verglasung und/oder des scheibenförmigen Glassubstrats, auf welchem die wenigstens eine Beschichtung nach Ausführungsformen angeordnet ist. Die noch auftretende Differenz erklärt sich durch Glas- und Grenzflächeneffekte.

Anhand von Tabelle 2 und den dort aufgeführten Proben kann auch allgemein der Einfluss einer Barriereschicht beispielhaft verdeutlicht werden. Bei Systemen ohne Barriere degradiert das System nach thermischer Belastung so, dass sich die Reflexionsfarbe um ΔE von mehr als 10 verändert und die Mikrowellenreflexion um mehr als 5% abnimmt (siehe Vergleichsbeispiel 2 der Tabelle 2, ohne Barriereschicht). Dies ist insofern kritisch, dass spezifizierte Mikrowellenleckraten nur noch grenzwertig oder auch nicht mehr eingehalten werden können. Da dies erst durch den Betrieb des Geräts passiert, kann es für den Anwender durch über die Lebensdauer des Gerätes zunehmende Mikrowellenleckrate zu Gefährdungen kommen.

Durch Verwendung einer nitridischen Barrierebeschichtung (Aluminium-Silizium-Nitrid) auf der Metallschicht wird eine solche Farbveränderung unterbunden (ΔE von kleiner 1) und die Mikrowellenreflexion reduziert sich nur noch um weniger als 5%, bevorzugt weniger als 2% im thermischen Zeitraffertest bei gleichzeitig hoher Reflektivität. Dies kann beispielhaft für die weiteren Beispiele und Vergleichsbeispiele in Tabelle 2 im Vergleich zu Vergleichsbeispiel 2 gesehen werden.

Generell können verschiedene Barriereschichten diesen positiven Einfluss auf die thermische Stabilität zeigen. Es hat sich jedoch herausgestellt, dass insbesondere nitridische Schichten (allgemein, ohne Beschränkung auf irgendein konkretes Beispiel können solche nitridischen Beschichtungen Aluminium-Silizium-Nitrid und/oder Siliziumnitrid und/oder Aluminiumnitrid sein) bei metallischen Schichten umfassend Mo und/oder Mg oder Mischungen hiervon zu den besten Ergebnissen geführt haben. Generell kann die Schichtdicke der Barriereschicht zwischen 5 nm und 300 nm liegen, besonders bevorzugt zwischen 10 nm und 100 nm, ganz besonders bevorzugt zwischen 10 nm und 40 nm.

Beschreibung der Zeichnungen

Im Folgenden wird die Erfindung anhand der nachfolgenden Figuren weiter erläutert. Es zeigen:

Fig. 1 einen Testaufbau zur Ermittlung der Mikrowellenreflexion an Verglasungen,

Fig. 2 ein Transmissionsspektrum für eine Verglasung nach einer Ausführungsform,

Fig. 3 eine Aufnahme einer Verglasung nach einer Ausführungsform zum Beleg der chemischen Beständigkeit,

Fig. 4 und 5 ein Tiefenprofil und ein Röntgendiffraktogramm von Beschichtungen nach Ausführungsformen,

Fig. 6 bis 8 beispielhafte schematische und nicht maßstabsgetreue Darstellungen von Verglasungen nach Ausführungsformen, und

Fig. 9 einen Ofen mit einer Tür nach Ausführungsformen.

Fig. 1 zeigt in Teil a) einen schematischen Aufbau eines Tests, wie er vorstehend zu den Verglasungen, welche in Tabelle 2 aufgeführt sind. Der Testaufbau umfasst den Mikrowellengenerator 50, welcher in diesem Testaufbau Mikrowellenleistung im Milliwatt-Bereich zur Verfügung stellt. Diese wird durch den Wellenleiter 5 auf die Verglasung 100 geleitet. Reflektierte Mikrowellenstrahlung kann mittels des Mikrowellenanalysators 52 bestimmt werden.

Teil c) von Fig. 1 zeigt eine photographische Darstellung eines Mikrowellengenerators 50, welcher beispielhaft für einen entsprechenden Testaufbau verwendet werden kann, es handelt sich hier um den Mikrowellengenerator der Firma S-Team, Modell SMS 2.1 für die Erzeugung von Mikrowellenstrahlung in einem Frequenzbereich bis 2,7 GHz.

Im mittleren Teil b) von Fig. 1 sind beispielhaft zwei photographische Darstellungen des Wellenleiters (rechts) sowie der Anordnung von Verglasung 100 in diesem zu sehen.

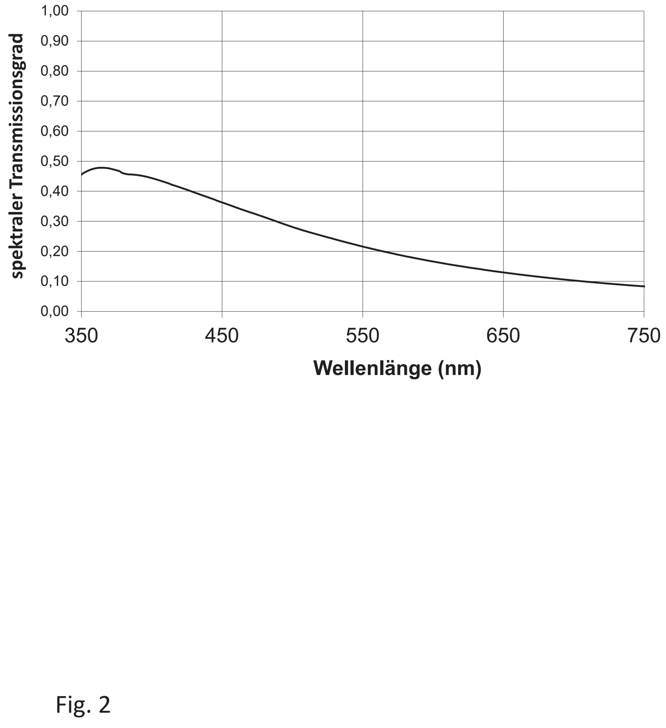

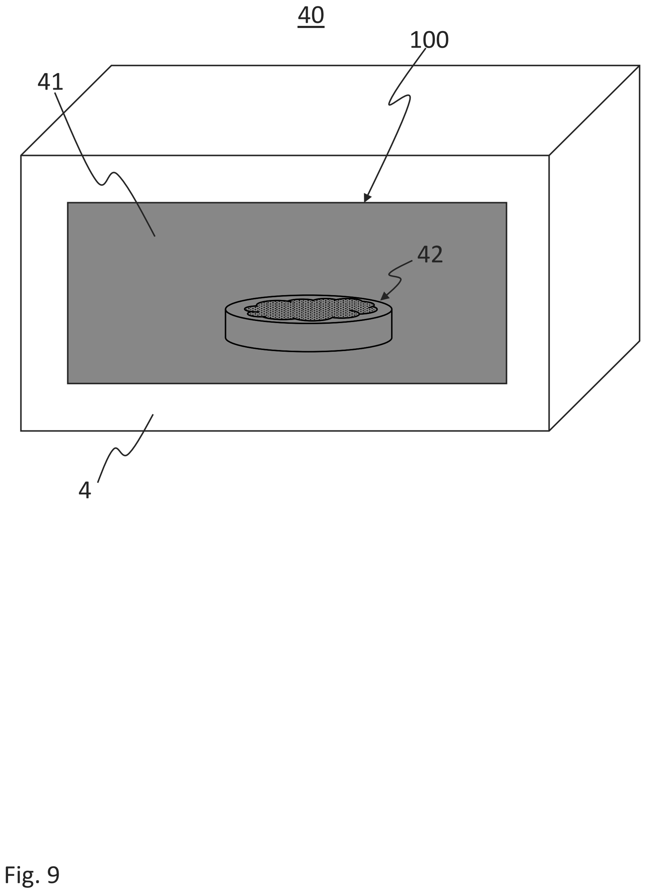

Fig. 2 zeigt ein Transmissionsspektrum im Bereich des sichtbaren Lichtes für eine beispielhafte Verglasung 100 nach einer Ausführungsform. Es ist erkennbar, dass trotz der hohen Reflexion im Bereich der Mikrowellenstrahlung die Verglasung, welche wenigstens eine Beschichtung umfassend wenigstens eine Schicht, vorzugsweise eine metallisch ausgebildete Schicht, umfasst, im visuellen Spektrum im Mittel einen spektralen Transmissionsgrad im Bereich zwischen 5 % und 70 %, bevorzugt zwischen 10 % und 50 %, besonders bevorzugt zwischen 20 % und 40 %, aufweist. Dies bedeutet, dass der spektrale Transmissionsgrad im Bereich des sichtbaren Lichts, also von 380 nm bis 780 nm, vorzugsweise von 400 nm bis 700 nm, zwischen 5% und 70 %, bevorzugt zwischen 10 % und 50 %, besonders bevorzugt zwischen 20 % und 40 % liegt (also für alle Wellenlängen in diesem Bereich mindestens 5 % und höchstens 70 % beträgt bzw. in den entsprechenden Grenzen der bevorzugten Bereiche liegt). Dies bedeutet, dass eine Semitransparenz vorliegt, durch die, zusammen mit einem neutralen Farbort und die im sichtbaren Spektrum existierende Restreflexion, abhängig vom Einbauzustand im Gerät, mit der Verglasung 100 nach Ausführungsformen vorzugsweise ein Deadfront-Effekt erzielt werden kann. Das Gargut und der Ofeninhalt sind beispielsweise bei einem Ofen mit einer Tür, welche eine Verglasung nach Ausführungsformen aufweist (siehe hierzu auch Fig. 9) nur beim Betrieb des entsprechenden Geräts, beispielsweise einer sogenannten "Mikrowelle", mit einer Innenraum-Beleuchtung sichtbar, beim Aus-Zustand erscheint eine reflektierende Oberfläche, welche dem Design des Geräts angepasst werden kann. Darüber hinaus bleibt das Gargut bzw. allgemein der Inhalt des Ofens aufgrund eines niedrigen Streuanteils des Lichts (Haze) bei der Verglasung nach einer Ausführungsform gut erkennbar. Der Haze befindet sich allgemein, ohne Beschränkung auf eine bestimmte Ausführungsform, bevorzugt im Bereich von weniger als 10%, besonders bevorzugt weniger als 5%, noch mehr bevorzugt weniger als 2%, ganz besonders bevorzugt weniger als 1%.

Die Verglasung nach Ausführungsformen umfasst allgemein, ohne Beschränkung auf ein spezielles Ausführungsbeispiel, ein scheibenförmiges Glassubstrat mit zwei einander gegenüberliegenden Seitenflächen und einer umlaufenden Kantenfläche, welches auf wenigstens einer Seitenfläche eine Beschichtung aufweist, die wenigstens eine Schicht, vor vorzugsweise als metallische Schicht, besonders bevorzugt umfassend Magnesium und/oder Molybdän und/oder Mischungen hiervon, umfasst, und beispielsweise allgemein als Molybdänschicht oder als Magnesiumschicht ausgebildet sein kann, also umfassend oder bestehend aus metallischem Molybdän oder metallischem Magnesium.

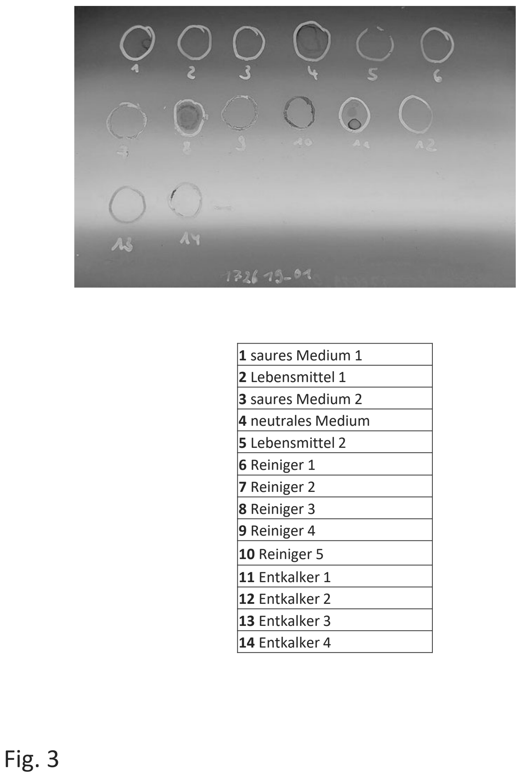

Die Auswahl von Molybdän und/oder Magnesium als Reflektormaterial ist überraschend, da man an sich davon ausgegangen wäre, dass Materialien wie Edelmetalle, beispielsweise Silber, bessere Reflektormaterialien darstellen sollten, da diese Edelmetalle allgemein eine recht hohe Reflexion, beispielsweise auch im Sichtbaren, aufweisen. Diese sind jedoch vergleichsweise teuer und im wie im Falle von Silber auch thermisch, mechanisch und chemisch sehr instabil. Überraschenderweise hat sich gezeigt, dass Molybdän-basierte Schichten gute mechanische und chemische Eigenschaften aufweisen und dieses Material überraschenderweise auch in der Ausbildung als dünne, semitransparente Schicht mit Schichtdicken lediglich im Nanometerbereich die Korrosionsbeständigkeit aus dem Bulkmaterial weitestgehend beibehält. Beispielhaft zeigen chemische Tests keine oder nur geringfügige Angriffe nach mehrfacher Belastung unter Raumtemperatur und bei 120°C. Dies ist beispielhaft für eine Beschichtung umfassend eine Schicht, die metallisch ausgebildet ist und Molybdän in metallischer Form umfasst, in Fig. 3 dargestellt, welche eine photographische Abbildung eines solchen Tests ist. In den eingezeichneten Kreisen, die nummeriert sind, sind die entsprechenden Substanzen, welche in der Tabelle der Fig. 3 aufgeführt sind, mit dem Schichtmaterial kontaktiert worden. Lediglich bei aggressiven Medien wie bestimmten Entkalkern oder Reinigern (Nr. 8, 12) ist ein stärkerer Angriff erkennbar.

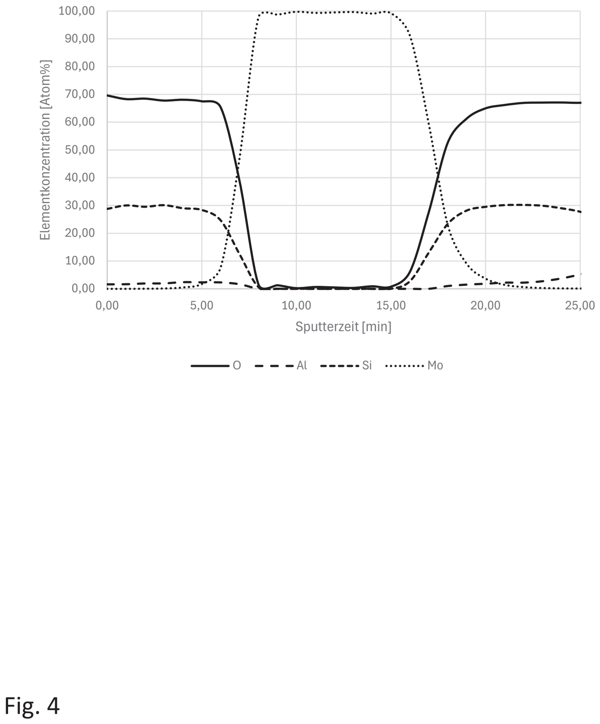

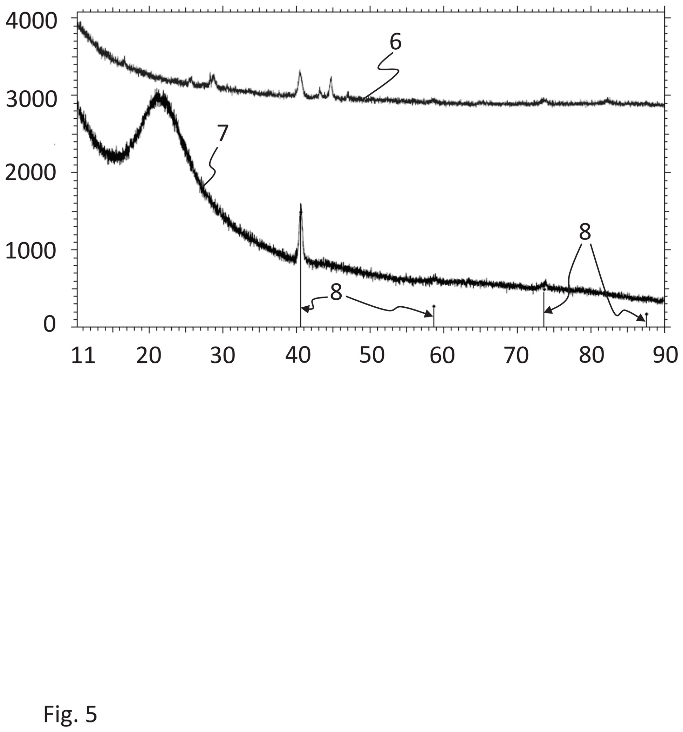

Fig. 4 und 5 zeigen die chemische (Fig. 4, XPS-Profil) und die kristallographische (Fig. 5, Röntgendiffraktogramm) Zusammensetzung einer Beschichtung auf einer Verglasung nach einer Ausführungsform. Wie auf dem Röntgendiffraktogramm nach Fig. 5 zu sehen ist (auf der X-Achse ist der $2\theta$-Winkel aufgetragen, auf der Y-Achse die Intensität in willkürlichen Einheiten), ist die metallische Schicht umfassend Molybdän, dargestellt in der Kurve 7, als kubischer Kristall ausgebildet, mit den charakteristischen Reflexen 8. Die Kurve 6 zeigt das Röntgendiffraktogramm des Aufbaus der Beschichtung, welche hier, für die betrachtete Probe, ein Sandwichaufbau umfassend eine (Al)SiO-Schicht ist, wie man anhand des XPS-Profils nach Fig. 4 erkennen kann. Auch in der Kurve 6 sind die charakteristischen Reflexe des Molybdän erkennbar. Die hier betrachtete Beschichtung umfasst eine Schicht, welche direkt an das scheibenförmige Glassubstrat angrenzt und als $SiO_2$-Schicht (umfassend etwas Aluminium) ausgebildet ist, weiterhin eine Molybdänschicht, anschließend wieder eine $SiO_2$-Schicht umfassend etwas Aluminium.

Es wird allgemein darauf hingewiesen, dass die Barriereschichten nach Ausführungsformen häufig Al-Si-O-N-Schichten sind, also neben Silizium noch mit Aluminium dotiert vorliegen und oxidisch oder nitridisch oder oxinitridisch ausgebildet sein können. Vereinfacht kann dabei auch von Siliziumnitridschicht oder Siliziumoxidschichten oder -oxinitridschichten gesprochen werden, wobei im Rahmen der vorliegenden Offenbarung darunter allgemein auch Schichten verstanden werden, welche, wie ausgeführt, auch Aluminium umfassen oder umfassen können.

Die Molybdänschicht bildet eine kubische Kristallstruktur aus und zeigt trotz der sehr dünnen Schichtdicke die genannten positiven Eigenschaften. Die Schichtdicken für die wenigstens eine Schicht, die nach einer bevorzugten Ausführungsform auch allgemein, ohne Beschränkung auf eine bestimmte Ausführungsform, metallisch ausgebildet sein kann, liegen im Bereich zwischen 5 nm und 100 nm, bevorzugt zwischen 7 nm und 50 nm. Dies ist insbesondere auch vorteilhaft, wenn die wenigstens eine Schicht als metallische Schicht bestehend aus oder umfassend Molybdän ausgebildet ist. Damit sind allgemein diese Schichten signifikant dünner als blickdichte Schichten, welche beispielsweise über thermisches Spritzen in der Werkzeugindustrie (ein bekanntes Einsatzgebiet beispielsweise von bekannten Molybdän-Schichten des Standes der Technik) eingesetzt werden und wo Schichtdicken üblicherweise im µm-Bereich liegen.

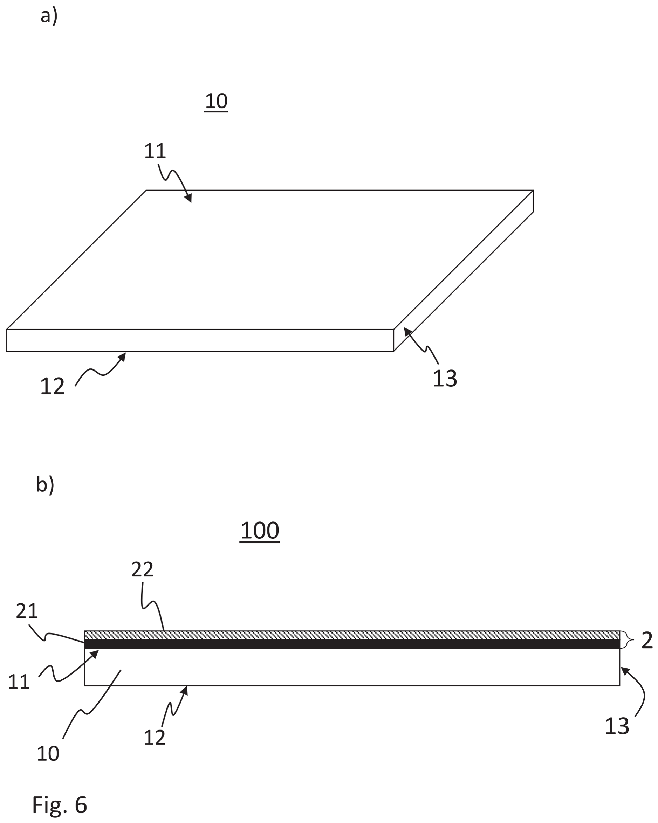

Fig. 6 bis Fig. 8 zeigen nun unterschiedliche schematische und nicht maßstabsgetreue Abbildungen von scheibenförmigen Glassubstraten und/oder Verglasungen nach Ausführungsformen.

Fig. 6 zeigt im oberen Bereich a) ein scheibenförmiges Glassubstrat 10, das zwei einander gegenüberliegende, vorzugsweise zueinander parallele, Seitenflächen 11 und 12 sowie eine umlaufende Kantenfläche 13 aufweist. Das scheibenförmige Glassubstrat 10 ist damit allgemein ein scheiben- oder plattenförmiger Formkörper umfassend oder aus Glas. Dies gilt in entsprechender Weise auch für ein weiteres scheibenförmiges Glassubstrat 10a, welches als zusätzliches Glassubstrat der Verglasung 100 ausgebildet sein kann.

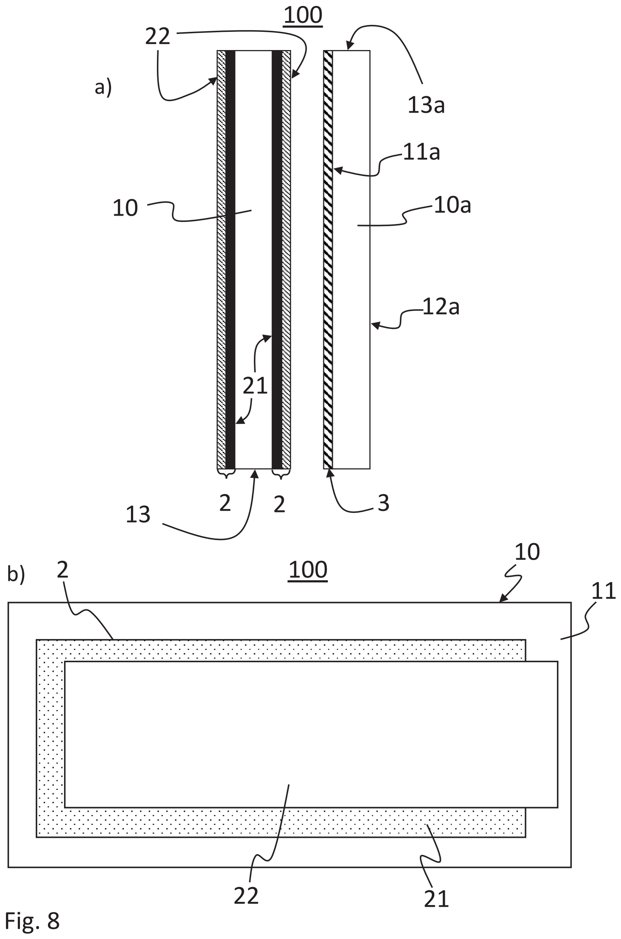

Im unteren Bereich b) der Fig. 6 ist eine Schnittansicht durch eine Verglasung 100 nach einer Ausführungsform dargestellt. Die Verglasung 100 umfasst ein scheibenförmiges Glassubstrat 10 mit den zwei einander gegenüberliegenden Seitenflächen 11, 12, und der umlaufenden Kantenfläche 13, wobei auf wenigstens einer Seitenfläche, hier der Seitenfläche 11, wenigstens eine Beschichtung 2 angeordnet ist. Die Beschichtung 2 kann allgemein, ohne Beschränkung auf ein bestimmtes Ausführungsbeispiel, vollflächig auf der wenigstens einen Seitenfläche 11 des scheibenförmigen Glassubstrats 10 angeordnet sein, aber auch nur bereichsweise. Eine bereichsweise und teilüberlappende Anordnung der beiden Schichten 21, 22 der Beschichtung 2 ist weiter unten unter Bezugnahme auf Fig. 8b) genauer beschrieben. Allgemein ist es möglich, dass - sollte die Beschichtung 2 zwei oder mehr Schichten umfassen - diese einander vollständig überlappen und insbesondere auch vollflächig oder zumindest fast vollflächig, beispielsweise mit einem Belegungsgrad der wenigstens einen Seitenfläche 11, von wenigstens 90% oder sogar 95% angeordnet sind. Im Übrigen kann die wenigstens eine Beschichtung 2 auch auf der Seitenfläche 12 alternativ oder zusätzlich angeordnet sein.

Die Verglasung 100 ist hier in der schematischen und nicht maßstabsgetreuen Darstellung der Fig. 6 b) so ausgebildet, dass sie wenigstens eine Beschichtung 2 umfasst, welche wenigstens eine Schicht 21, die hier direkt angrenzend an die Seitenfläche 11 des scheibenförmigen Glassubstrats 10 angeordnet ist, umfasst. Weiterhin umfasst die Beschichtung 2 hier noch eine Schicht 22.

Allgemein, ohne Beschränkung auf das in Fig. 6 b) dargestellte Beispiel einer Verglasung 100, weist die Verglasung 100 auf:

- eine Mikrowellenreflexion zwischen 20% und 95%, bevorzugt zwischen 60% und 95 %, besonders bevorzugt zwischen 70% und 95%, bevorzugt bestimmt für eine Frequenz zwischen 2,3 GHz und 2,7 GHz,
- einen mittleren spektralen Transmissionsgrad der Verglasung 100 und/oder des scheibenförmigen Glassubstrats 10, bezogen auf die Lichtart C, von wenigstens 5 % im Wellenlängenbereich von 380 nm bis 780 nm, und bevorzugt höchstens 70%, besonders bevorzugt zwischen 10% und 50%, ganz besonders bevorzugt zwischen 20 % und 40%, insbesondere bezogen auf eine Dicke des scheibenförmigen Glassubstrats 10 und/oder der Verglasung 100 zwischen 3 mm und 4 mm,
- eine Trübung (Haze) von weniger als 10%, bevorzugt weniger als 5%, besonders bevorzugt weniger als 2%, ganz besonders bevorzugt weniger als 1%, und wobei die wenigstens eine Schicht 21 (als Bestandteil der Beschichtung 2), eine metallische Schicht umfassend Magnesium oder Molybdän oder Mischungen hiervon ist. Die ausgezeichneten Eigenschaften dieser metallischen Schichten sind auch vorstehend, gerade im Vergleich mit bekannten metallischen Schichten aus NiCr des Standes der Technik, im Beispielteil erläutert.

Bevorzugt kann nach Ausführungsformen der Verglasung 100 diese gekennzeichnet sein durch eine Temperaturbeständigkeit,

sodass der Farbortunterschied ΔE zwischen dem Farbort der Verglasung 100 nach Beschichtung und nach einer erfolgten Temperaturbehandlung bei 250°C für 100 Stunden höchstens 5, bevorzugt höchstens 3, besonders bevorzugt höchstens 1, beträgt, wobei der Farbortunterschied, ΔE, definiert ist als

$$\Delta E = \sqrt{((a_0^* - a_T^*)^2 + (b_0^* - b_T^*)^2 + (L_0^* - L_T^*)^2)},$$

wobei der Farbort E gegeben ist im CIEL\*a\*b\*-System und wobei der Index "0" sich auf den Farbort vor Temperaturbehandlung und der Index "T" sich auf den Farbort nach Temperaturbehandlung bezieht,
und/oder

sodass die Mikrowellenreflexion nach erfolgter Temperaturbehandlung bei 250°C für 100 Stunden höchstens 5%, bevorzugt höchstens 2% kleiner ist als vor Temperaturbehandlung.

Weiterhin kann nach einer Ausführungsform die Verglasung eine Mikrowellenleckrate von weniger als 1 mW/cm$^2$, bevorzugt von weniger als 0,5 mW/cm$^2$, besonders bevorzugt von weniger 0,2 mW/cm$^2$ aufweisen.

Vorteilhaft kann die wenigstens eine Schicht 21 eine Dicke zwischen 5 nm und 100 nm, bevorzugt zwischen 7 nm und 50 nm aufweisen.

Weiterhin kann nach einer bevorzugten Ausführungsform der Verglasung 100, wie sie beispielhaft auch in der Fig. 6 b) dargestellt ist, eine Barriereschicht 22 als Bestandteil der Beschichtung 2 umfassen. Die Barriereschicht 22 kann allgemein, ohne Beschränkung auf eine bestimmte Ausführungsform, so ausgestaltet sein, dass sie ausgebildet ist als Oxid und/oder Nitrid und/oder Oxinitrid von Aluminium, Silizium, Titan, Hafnium und/oder Chrom, wobei bevorzugt die Barriereschicht 22 ausgebildet ist als Nitrid umfassend Silizium und Aluminium, wobei der Massenanteil an Aluminium an der metallischen und halbleitenden Komponente mindestens 5% und bevorzugt höchstens 70% beträgt und besonders bevorzugt zwischen 5% und 50% liegt.

Allgemein kann die Barriereschicht 22 eine Dicke zwischen 5 nm und 300 nm aufweisen., bevorzugt zwischen 10 nm und 100 nm, besonders bevorzugt zwischen 10 nm und 40 nm.

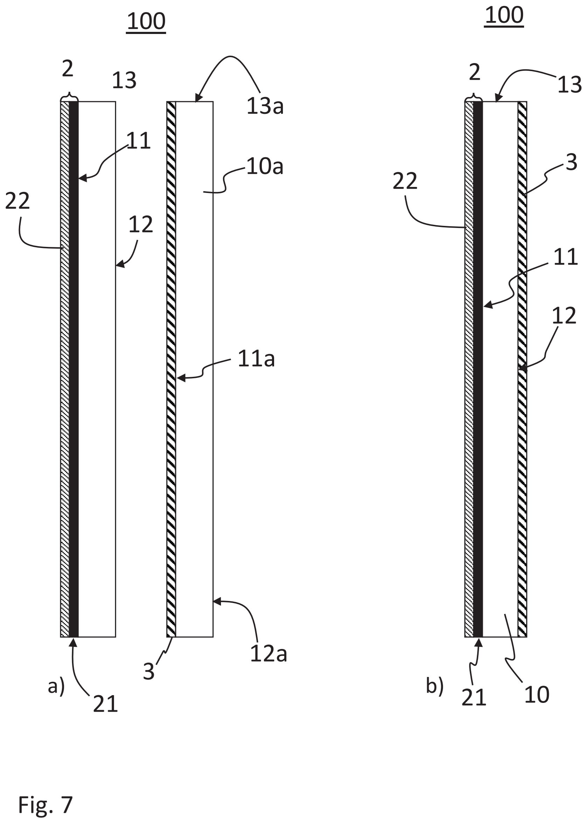

Fig. 7 zeigt zwei schematische und nicht maßstabsgetreue Darstellung von unterschiedlichen Ausführungsformen von Verglasungen 100. Die Verglasungen 100 hach Fig. 7 umfassen jeweils eine weitere Beschichtung 3, die ein transparentes leitfähiges Oxid umfasst.

In Fig. 7 a) umfasst die Verglasung 100 zwei scheibenförmige Glassubstrate 10, 10a, mit Seitenflächen 11, 11a, 12, 12a und der umlaufenden Kantenfläche 13, 13a. Auf der Seitenfläche 11 des scheibenförmigen Glassubstrat 10 ist die Beschichtung 2 angeordnet, wobei die wenigstens eine Beschichtung 21, welche vorzugsweise als metallische Schicht ausgebildet ist, insbesondere als metallische Schicht umfassend oder aus Magnesium und/oder Molybdän und/oder Mischungen hiervon, direkt an die Seitenfläche 11 des Substrats 10 angrenzt. Allgemein kann aber auch vorgesehen sein, dass zwischen der Seitenfläche 11 (oder 12) des scheibenförmigen Glassubstrats 10 eine weitere Schicht angeordnet ist, welche beispielsweise identisch zu der Barriereschicht 22 ausgebildet sein kann (aber nicht sein muss). Die Beschichtung 2 umfasst weiterhin hier die direkt an die Schicht 21 angrenzende Barriereschicht 22. Wie die Schichten 21, 22 und die Beschichtung 2 kann allgemein auch die weitere Beschichtung 3 vollflächig oder nur teilflächig auf die entsprechende Seitenfläche aufgebracht sein. Teilüberlappungen mit der Beschichtung 2 sind möglich, wobei es bevorzug sein kann, wenn alle Schichten und/oder Beschichtungen vollflächig oder zumindest fast vollflächig, also zu wenigstens 90% oder 95% oder mehr die jeweilige Seitenfläche 11, 12, bedecken. Wie ausgeführt umfasst die Verglasung 100 hier zusätzlich zum scheibenförmigen Glassubstrat 10 ein weiteres scheibenförmiges Glassubstrat 10a, mit zwei einander gegenüberliegenden Seitenflächen 11a, 12a und einer umlaufenden Kantenfläche 13a, und die weitere Beschichtung 3 ist auf einer der beiden Seitenflächen 11a, 12a des weiteren scheibenförmigen Glassubstrats 10a angeordnet, wobei bevorzugt auf beiden Seitenflächen 11, 12 des einen scheibenförmigen Glassubstrats 10 die Beschichtung 2 angeordnet sein kann, wie dies beispielhaft auch in der Fig. 8 a) dargestellt ist.

Fig. 7 b) zeigt eine weitere Ausführungsform der Verglasung 100, die eine weitere Beschichtung 3 umfasst. Hierbei umfasst die Verglasung 100 nur ein weiteres scheibenförmiges Glassubstrat 10. Die weitere Beschichtung 3 ist auf der Seitenfläche 12 des scheibenförmigen Glassubstrats 10 angeordnet, mit anderen Worten auf der Seitenfläche des scheibenförmigen Glassubstrats 10, auf welcher nicht die wenigstens eine Beschichtung 2 angeordnet ist.

Allgemein kann, wie ausgeführt, zwischen der Schicht 21 eine weitere Schicht, die identisch, zumindest hinsichtlich der Materialzusammensetzung, zur Barriereschicht 22 ausgebildet sein kann, angeordnet sein.

In den Darstellungen der Fig. 7 sind die Verglasungen so ausgerichtet, dass die Beschichtung 2 nach links zeigt. Auch wenn die Verglasungen 100 hier nicht in einer Einbausituation gezeigt sind, kann vorgesehen sein, dass die Verglasungen 100, beispielsweise als Bestandteil einer Tür 4 eines Ofens 40 (siehe beispielsweise die schematische und nichts maßstabsgetreue Darstellung nach Fig. 9), so ausgerichtet ist, dass die Beschichtung 2 im Einbauzustand in Richtung des Offeninnern 41 zeigt und entsprechend auch die Beschichtung 3 ins Ofeninnere. Dies ist aber nicht zwingend notwendig und andere Anordnungen sind möglich, wobei allerdings vorzugsweise bei einer Verglasung, welche eine weitere Beschichtung 3 aufweist, das scheibenförmige Glassubstrat 10 mit der Beschichtung 2 bzw. die Seite des scheibenförmigen Glassubstrats 10, auf welcher die Beschichtung 2 angeordnet ist, in Richtung des Offeninnern 41 gerichtet ist, um ein Aufheizen der weiteren Beschichtung 3 und/oder des scheibenförmigen Glassubstrats 10/10a und/oder der Verglasung 100 möglichst zu vermeiden oder zumindest gering zu halten.

Fig. 8 a) zeigt wie ausgeführt eine weitere Ausführungsform der Verglasung 100 mit zwei scheibenförmigen Glassubstraten 10, 10a sowie einer weiteren Beschichtung 3, wobei hier auf dem scheibenförmigen Glassubstrat 10 auf beiden Seitenflächen die Beschichtung 2 angeordnet ist. Diese kann auf beiden Seiten hinsichtlich Materialzusammensetzung der Schichten 21, 22 und/oder von deren jeweiligen Dicken identisch ausgebildet sein, dies ist aber nicht zwingend erforderlich. Auf einer oder auf beiden Seitenflächen 11, 12 können auch weitere Schichten zwischen der Schicht 21 und der entsprechenden Seitenfläche angeordnet sein. Der Übersichtlichkeit halber sind in Fig. 8 a) die Seitenflächen 11, 12 des scheibenförmigen Glassubstrats 10 nicht bezeichnet.

Im unteren Bereich zeigt Fig. 8 b) schließlich eine schematische und nicht maßstabsgetreue Aufsicht auf eine Verglasung 100 umfassend ein scheibenförmiges Glassubstrat 10, wobei hier der Blick auf eine Seitenfläche 11 fällt, auf welcher die wenigstens eine Beschichtung 2 zumindest bereichsweise aufgebracht ist. Diese umfasst hier die Schicht 21 sowie die Schicht 22. Hier sind die Schichten 21, 22 nur teilüberlappend aufgebracht, was aber, wie ausgeführt, nicht zwingend der Fall sein muss. Vielmehr können allgemein alle Beschichtungen und/oder Schichten auch vollflächig und einander vollständig überlappend aufgebracht sein. Insbesondere kann es allgemein, ohne Beschränkung auf irgendeine spezielle Ausführungsform der Verglasung 100, besonders vorteilhaft sein, wenn die Barriereschicht 22 die Schicht 21 vollständig abdeckt, um eine Degradation der Schicht 21 weitestgehend zu unterbinden oder zumindest zu mindern.

Fig. 9 zeigt schließlich in schematischer und nicht maßstabsgetreuer Darstellung einen Ofen 40 mit einer Tür 4. Insbesondere kann der Ofen 40 ausgebildet sein als Ofen, welcher auch mittels Mikrowellenstrahlung betrieben wird. Die Tür 4 umfasst die Verglasung 100 nach einer Ausführungsform der vorliegenden Offenbarung, wobei hier die Semitransparenz der Verglasung 100 nach einer bevorzugten Ausführung durch die wenigstens eine Beschichtung 2 (nicht bezeichnet) schematisch angedeutet ist. Der Innenraum 41 des Ofens 40 mit dem schematisch dargestellten Gargut 42 ist daher für die dargestellte Ausführungsform im eingeschalteten Zustand des Ofens 40 sichtbar, nicht jedoch im ausgeschalteten Zustand, bei welchem ein sogenannter Dead-Front-Effekt erzielbar ist, d.h. eingestellt werden kann. Die Verglasung 100 umfasst nach einer bevorzugten Ausführungsform das scheibenförmige Glassubstrat 10 und ein weiteres scheibenförmiges Glassubstrat 10a, wobei das scheibenförmige Glassubstrat 10 dem Innenraum 41 des Ofens 40 zugewandt ist und das weitere scheibenförmige Glassubstrat 10a eine weitere Beschichtung 3, die auf wenigstens einer Seitenfläche 11a, 12a des Weiteren scheibenförmigen Glassubstrats 10a angeordnet ist, umfasst. Eine solche Verglasung 100 ist beispielsweise vorstehend in fig. 7 a) und 8 a) beispielhaft dargestellt.

Nach einer Ausführungsform der Tür 4 umfassen Verglasung 100 und/oder Tür 4 kein Metallgitter.

Neben den in der vorliegenden Offenbarung ausführlich beschriebenen Funktionsschichten und -beschichtungen der Verglasung 100 und/oder des scheibenförmigen Glassubstrats 10/10a, also der Beschichtung 2, der Schicht 21, der Barriereschicht 22 und der weiteren Beschichtung 3 kann allgemein die Verglasung 100 und/oder das scheibenförmige Glassubstrat 10/10a auch noch weitere Beschichtungen und/oder Schichten umfassen, beispielsweise Markierungsschichten oder Maskierungen (beispielsweise on Form von Rahmen), gedruckte Schichten, die Logos bilden und/oder ähnliche weitere Schichten oder Beschichtungen.

Bezugszeichenliste

| | |
|---|---|
| 100 | Verglasung |
| 10, 10a | Scheibenförmiges Glassubstrat |
| 11, 11a, 12, 12a | Seitenflächen des scheibenförmigen Glassubstrats |
| 13, 13a | Umlaufende Kantenfläche des scheibenförmigen Glassubstrats |
| 2 | Beschichtung |
| 21 | Schicht |
| 22 | Barriereschicht |
| 3 | Weitere Beschichtung |
| 4 | Tür |
| 40 | Ofen |
| 41 | Innenraum |
| 42 | Gargut |
| 5 | Wellenleiter |
| 51 | Mikrowellengenerator |
| 52 | Analysator für Mikrowellenstrahlung |
| 6, 7 | Kurven von Diffraktogrammen |
| 8 | Charakteristische Röntgenreflexe |

**Patentansprüche**

1. Verglasung (100) umfassend ein scheibenförmiges Glassubstrat (10) mit zwei einander gegenüberliegenden Seitenflächen (11, 12) und einer umlaufenden Kantenfläche (13) und wenigstens eine auf wenigstens einer Seitenfläche (11, 12) angeordnete Beschichtung (2) umfassend wenigstens eine Schicht (21), wobei die Verglasung (100) aufweist

   - eine Mikrowellenreflexion zwischen 20% und 95%, bevorzugt zwischen 60% und 95 %, besonders bevorzugt zwischen 70% und 95%, bevorzugt bestimmt für eine Frequenz zwischen 2,3 GHz und 2,7 GHz,
   - einen mittleren spektralen Transmissionsgrad der Verglasung (100) und/oder des scheibenförmigen Glassubstrats (10), bezogen auf die Lichtart C, von wenigstens 5 % im Wellenlängenbereich von 380 nm bis 780 nm, und bevorzugt höchstens 70%, besonders bevorzugt zwischen 10% und 50%, ganz besonders bevorzugt zwischen 20% und 40%, insbesondere bezogen auf eine Dicke des scheibenförmigen Glassubstrats (10) und/oder der Verglasung (100) zwischen 3 mm und 4 mm,
   - eine Trübung (Haze) von weniger als 10%, bevorzugt weniger als 5%, besonders bevorzugt weniger als 2%, ganz besonders bevorzugt weniger als 1%,

   und wobei die wenigstens eine Schicht (21) eine metallische Schicht umfassend Magnesium oder Molybdän und/oder Mischungen hiervon ist.

2. Verglasung (100) nach Anspruch 1, wobei die Summe der Gehalte von Magnesium und Molybdän in der Schicht (21) wenigstens 40 wt-% beträgt, bevorzugt wenigstens 70 wt-% und mehr bevorzugt wenigstens 90 wt-%.

3. Verglasung (100) nach Anspruch 2, wobei die Verglasung (100) eine Mikrowellenleckrate von weniger als 1 mW/cm$^2$, bevorzugt von weniger als 0,5 mW/cm$^2$, besonders bevorzugt von weniger 0,2 mW/cm$^2$ aufweist.

4. Verglasung (100) nach einem der Ansprüche 1 bis 3, wobei die Beschichtung (2) eine Barriereschicht (22) umfasst, wobei die Barriereschicht (22) ausgebildet ist als Oxid und/oder Nitrid und/oder Oxinitrid von Aluminium, Silizium, Titan, Hafnium und/oder Chrom, wobei bevorzugt die Barriereschicht (22) ausgebildet ist als Nitrid umfassend Silizium und Aluminium, wobei der Massenanteil von Aluminium an der metallischen und halbleitenden Komponente mindestens 5% und bevorzugt höchstens 70% beträgt und besonders bevorzugt zwischen 5% und 50% liegt.

5. Verglasung (100) nach einem der Ansprüche 1 bis 4, wobei die Beschichtung (2) so ausgebildet ist, dass die Mikrowellenreflexion der Verglasung (100), bei welchem die Beschichtung (2) nur auf einer Seitenfläche (11, 12) des scheibenförmigen Glassubstrats (10) angeordnet ist, bestimmt für die Seitenfläche (11, 12) der Verglasung (100), auf welcher die Beschichtung (2) angeordnet ist, sich um nicht mehr als 30 %, bevorzugt nicht mehr als 20 %, von der Mikrowellenreflexion unterscheidet, welche bestimmt ist für die Seitenfläche (11, 12) der Verglasung (100), auf welcher die Beschichtung (2) nicht angeordnet ist, erhalten wird, vorzugsweise bestimmt für eine Mikrowellenfrequenz zwischen 2,3 GHz und 2,7 GHz.

6. Verglasung (100) nach einem der Ansprüche 1 bis 5, wobei die Barriereschicht (22) eine Dicke zwischen 5 nm und 300 nm aufweist, bevorzugt zwischen 10 nm und 100 nm, besonders bevorzugt zwischen 10 nm und 40 nm.

7. Verglasung (100) nach einem der Ansprüche 1 bis 6, aufweisend eine Temperaturbeständigkeit,

   sodass der Farbortunterschied ∆E zwischen dem Farbort der Verglasung (100) nach Beschichtung und nach einer erfolgten Temperaturbehandlung bei 250°C für 100 Stunden höchstens 5 beträgt, bevorzugt höchstens 3, besonders bevorzugt höchstens 1, beträgt, wobei der Farbortunterschied, ∆E, definiert ist als

   $$\Delta E = \sqrt{((a_0^* - a_T^*)^2 + (b_0^* - b_T^*)^2 + (L_0^* - L_T^*)^2)},$$

   wobei der Farbort E gegeben ist im CIEL*a*b*-System und wobei der Index "0" sich auf den Farbort vor der Temperaturbehandlung und der Index "T" sich auf den Farbort nach der Temperaturbehandlung bezieht, und/oder
   sodass die Mikrowellenreflexion nach erfolgter Temperaturbehandlung bei 250°C für 100 Stunden höchstens 5%, bevorzugt höchstens 2% kleiner ist als vor der Temperaturbehandlung.

8. Verglasung (100), insbesondere nach einem der Ansprüche 1 bis 7, umfassend ein scheibenförmiges Glassubstrat (10) mit zwei einander gegenüberliegenden Seitenflächen (11, 12) und einer umlaufenden Kantenflächen (13) und wenigstens eine auf wenigstens einer Seitenfläche (11, 12) angeordnete Beschichtung (2) umfassend wenigstens eine Schicht (21), wobei die Verglasung (100) aufweist

- eine Mikrowellenreflexion zwischen 20% und 95%, bevorzugt zwischen 60% und 95 %, besonders bevorzugt zwischen 70% und 95%, bevorzugt bestimmt für eine Frequenz zwischen 2,3 GHz und 2,7 GHz,
- einen mittleren spektralen Transmissionsgrad der Verglasung (100) und/oder des scheibenförmigen Glassubstrats (10), bezogen auf die Lichtart C, von wenigstens 5 % im Wellenlängenbereich von 380 nm bis 780 nm, und bevorzugt höchstens 70%, besonders bevorzugt zwischen 10% und 50%, ganz besonders bevorzugt zwischen 20 % und 40%, insbesondere bezogen auf eine Dicke des scheibenförmigen Glassubstrats (10) und/oder der Verglasung (100) zwischen 3 mm und 4 mm,
- eine Trübung (Haze) von weniger als 10%, bevorzugt weniger als 5%, besonders bevorzugt weniger als 2%, ganz besonders bevorzugt weniger als 1%,

und wobei die wenigstens eine Schicht (21) eine metallische Schicht umfassend Magnesium oder Molybdän und/oder Mischungen hiervon ist,
wobei die Verglasung eine weitere Beschichtung (3) umfassend ein transparentes leitfähiges Oxid (TCO) umfasst, und wobei

- die weitere Beschichtung (3) auf der Seitenfläche (11, 12) des scheibenförmigen Glassubstrats (10) angeordnet ist, auf welcher nicht die wenigstens eine Beschichtung (2) angeordnet ist, oder wobei
- die Verglasung (100) ein weiteres scheibenförmiges Glassubstrat (10a) mit zwei einander gegenüberliegenden Seitenflächen (11a, 12a) und einer umlaufenden Kantenfläche (13a) umfasst und die weitere Beschichtung (3) auf einer der beiden Seitenflächen (11a, 12a) des Weiteren scheibenförmigen Glassubstrats (10a) angeordnet ist, und wobei besonders bevorzugt auf beiden Seitenflächen (11, 12) des einen scheibenförmigen Glassubstrats (10) die Beschichtung (2) angeordnet ist,

wobei bevorzugt die Verglasung (100) eine Mikrowellenleckrate von weniger als 1 mW/cm$^2$, bevorzugt von weniger als 0,5 mW/cm$^2$, besonders bevorzugt von weniger 0,2 mW/cm$^2$ aufweist.

9. Verglasung (100) nach einem der Ansprüche 1 bis 8, wobei zwischen der wenigstens einen Schicht (21) und der Seitenfläche (11, 12) des scheibenförmigen Glassubstrats (10) eine weitere Schicht (23) angeordnet ist, wobei die weitere Schicht (23) als Oxid und/oder Nitrid und/oder Oxinitrid von Aluminium, Silizium, Titan, Hafnium und/oder Chrom ausgebildet sein kann, bevorzugt als Nitrid umfassend Silizium und Aluminium, wobei insbesondere die weitere Schicht (23) und die Barriereschicht (22) gleich ausgebildet sein können.

10. Verglasung (100) nach einem der Ansprüche 1 bis 9, wobei die wenigstens eine Schicht (21) eine Dicke zwischen 5 nm und 100 nm, bevorzugt zwischen 7 nm und 50 nm aufweist.

11. Verglasung (100) nach einem der Ansprüche 1 bis 10, wobei die wenigstens eine Schicht (21) einen Flächenwiderstand zwischen 1 Ohm/□ und 500 Ohm/□, bevorzugt zwischen 5 Ohm/□ und 100 Ohm/□, besonders bevorzugt zwischen 5 Ohm/□ und 50 Ohm/□ aufweist.

12. Tür (4) eines Ofens (40), insbesondere Tür (4) eines Ofens (40), welcher auch mittels Mikrowellenstrahlung betrieben wird, umfassend eine Verglasung (100) nach einem der Ansprüche 1 bis 11.

13. Tür (4) nach Anspruch 12, wobei die Verglasung (100) das scheibenförmige Glassubstrat (10) und ein weiteres scheibenförmiges Glassubstrat (10a) umfasst, das scheibenförmige Glassubstrat (10) dem Innenraum (41) des Ofens (40) zugewandt ist und das weitere scheibenförmige Glassubstrat (10a) eine weitere Beschichtung (3), die auf wenigstens einer Seitenfläche (11a, 12a) des Weiteren scheibenförmigen Glassubstrats (10a) angeordnet ist, umfasst.

14. Tür (4) nach einem der Ansprüche 12 oder 13, wobei die Verglasung (100) und/oder die Tür (4) kein Metallgitter umfassen.

15. Ofen (40), umfassend eine Verglasung (100) nach einem der Ansprüche 1 bis 11 und/oder eine Tür (4) nach einem der Ansprüche 12 bis 14.

Fig. 1

Fig. 2

| | |
|---|---|
| **1** | saures Medium 1 |
| **2** | Lebensmittel 1 |
| **3** | saures Medium 2 |
| **4** | neutrales Medium |
| **5** | Lebensmittel 2 |
| **6** | Reiniger 1 |
| **7** | Reiniger 2 |
| **8** | Reiniger 3 |
| **9** | Reiniger 4 |
| **10** | Reiniger 5 |
| **11** | Entkalker 1 |
| **12** | Entkalker 2 |
| **13** | Entkalker 3 |
| **14** | Entkalker 4 |

Fig. 3

Fig. 4

Fig. 5

a)

b)

Fig. 6

Fig. 7

Fig. 8

Fig. 9

**Europäisches Patentamt**
**European Patent Office**
**Office européen des brevets**

## EUROPÄISCHER RECHERCHENBERICHT

Nummer der Anmeldung

EP 25 20 7191

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2021 132627 A1 (SCHOTT AG [DE]) 15. Juni 2023 (2023-06-15) | 1,4-15 | INV. C03C17/09 |
| A | * Absätze [0008] - [0091]; Ansprüche; Beispiele; Tabellen * | 2,3 | C03C17/36 |
| | ----- | | |
| A | WO 2016/026590 A1 (HERAEUS DEUTSCHLAND GMBH & CO KG [DE]) 25. Februar 2016 (2016-02-25) * Ansprüche; Beispiele; Tabellen * | 1-15 | |
| | ----- | | |

**RECHERCHIERTE SACHGEBIETE (IPC)**

C03C
F24C
H05B

Der vorliegende Recherchenbericht wurde für alle Patentansprüche erstellt

| Recherchenort | Abschlußdatum der Recherche | Prüfer |
|---|---|---|
| München | 25. Februar 2026 | Wrba, Jürgen |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 20 7191

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-02-2026

| Im Recherchenbericht angeführtes Patentdokument | Datum der Veröffentlichung | Mitglied(er) der Patentfamilie | Datum der Veröffentlichung |
|---|---|---|---|
| DE 102021132627 A1 | 15-06-2023 | CN 118451785 A | 06-08-2024 |
| | | DE 102021132627 A1 | 15-06-2023 |
| | | EP 4445687 A1 | 16-10-2024 |
| | | WO 2023104713 A1 | 15-06-2023 |
| WO 2016026590 A1 | 25-02-2016 | CN 106660865 A | 10-05-2017 |
| | | DE 102014111935 A1 | 25-02-2016 |
| | | EP 3183374 A1 | 28-06-2017 |
| | | JP 2017525852 A | 07-09-2017 |
| | | KR 20170043639 A | 21-04-2017 |
| | | TW 201608042 A | 01-03-2016 |
| | | US 2018223418 A1 | 09-08-2018 |
| | | WO 2016026590 A1 | 25-02-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10307217 A1
- WO 2021152083 A
- DE 102021132627 A1